# EUROPÄISCHE PATENTSCHRIFT

(11) **EP 4 025 440 B1**
(45) Veröffentlichungstag und Bekanntmachung des Hinweises auf die Patenterteilung: **22.04.2026**
(21) Anmeldenummer: 20761221.9
(22) Anmeldetag: 21.08.2020
(51) Int. Cl.: B60D 1/06, B60D 1/54, B60D 1/62, B60D 1/24

(54) **STEUERGERÄT FÜR EINE ANHÄNGEKUPPLUNG MIT ZUSTANDSSIGNALPRÜFUNG**
CONTROL UNIT FOR A TRAILER COUPLING WITH STATUS SIGNAL CHECK
UNITÉ DE COMMANDE POUR UN ACCOUPLEMENT DE REMORQUE AVEC CONTRÔLE DE SIGNAL D'ÉTAT

(30) Priorität: 06.09.2019 DE 102019124026; 10.12.2019 DE 102019133793
(43) Veröffentlichungstag der Anmeldung: 13.07.2022
(73) Patentinhaber: WESTFALIA - Automotive GmbH, 33378 Rheda-Wiedenbrück (DE)
(72) Erfinder: KRANZ, Torsten, 59590 Geseke (DE)
(74) Vertreter: Patentanwälte Bregenzer und Reule Partnerschaftsgesellschaft mbB
(86) Internationale Anmeldenummer: PCT/EP2020/073546
(87) Internationale Veröffentlichungsnummer: WO 2021/043604

(56) Entgegenhaltungen:
- EP-A1- 2 862 732
- EP-A1- 3 594 027
- DE-A1- 10 135 272
- DE-A1- 102011 052 433
- DE-A1- 102014 000 859

## Beschreibung

Die Erfindung betrifft ein Steuergerät für eine Anhängekupplung für ein Kraftfahrzeug gemäß dem Oberbegriff des Anspruchs 1.

Ein derartiges Steuergerät ist beispielsweise in EP 2 862 732 A1 erläutert. Ein weiteres Steuergerät, dass gemäß Artikel 54(3) EPU zum Stand der Technik gehört, ist in EP 3 594 027 A1 erläutert.

Das Zustandssignal signalisiert beispielsweise eine Betriebsbereitschaft des Kraftfahrzeugs, wenn z.B. eine Zündung des Kraftfahrzeugs eingeschaltet ist und das Kraftfahrzeug prinzipiell fahren könnte. Das Zustandssignal kann auch beispielsweise ein Geschwindigkeitssignal sein, welches einen Fahrbetrieb des Kraftfahrzeugs signalisiert. Wenn das Steuergerät anhand des Zustandssignals erkennt, dass das Kraftfahrzeug beispielsweise fahren könnte oder fährt, ist ein Verstellen des Kupplungsarms aus der Gebrauchsstellung, beispielsweise ein Lösen der Fixierung oder ein Antreiben des Kupplungsarms durch den Kupplungsarm-Antrieb in die Nichtgebrauchsstellung, blockiert. Es kann nämlich sein, dass im Fahrbetrieb schon ein Anhänger oder Lastenträger an den Kupplungsarm angekuppelt ist, sodass der Kupplungsarm zuverlässig in der Gebrauchsstellung verbleiben muss. Weiterhin durchläuft der Kupplungsarm regelmäßig zwischen der Gebrauchsstellung und der Nichtgebrauchsstellung eine Bewegungsbahn im Sinne einer Verringerung der Bodenfreiheit des Kraftfahrzeugs, d. h. der Kupplungsarm kann in Zwischenstellungen zwischen den Endstellungen, der Gebrauchsstellung und der Nichtgebrauchsstellung, weiter nach unten vor die Karosserie des Kraftfahrzeugs vorstehen als in den Endstellungen. Allerdings setzt diese Sicherheitsüberprüfung voraus, dass die Zustandssignale ordnungsgemäß vom Steuergerät empfangen werden können. Dies ist nicht in jedem Fall gewährleistet.

Es ist daher die Aufgabe der vorliegenden Erfindung, die Betriebssicherheit eines Steuergeräts der eingangs genannten Art zu verbessern bzw. ein verbessertes Verfahren zum Betreiben eines Steuergeräts bereitzustellen.

Zur Lösung der Aufgabe ist ein Steuergerät gemäß der technischen Lehre des Anspruchs 1 vorgesehen.

Zur Lösung der Aufgabe ist ferner ein Verfahren gemäß der technischen Lehre des Anspruchs 14 vorgesehen.

Sämtliche nachfolgend im Zusammenhang mit dem Steuergerät beschriebenen, insbesondere vorteilhaften, Verfahrensschritte können selbstverständlich auch bei einem erfindungsgemäßen Verfahren vorteilhaft vorgesehen sein. Wenn nachfolgend Verfahrensschritte, insbesondere vorteilhafte Verfahrensschritte, beschrieben sind, ist das Steuergerät vorteilhaft zu deren Ausführung ausgestaltet, beispielsweise anhand von Programmcode, der durch einen Prozessor des Steuergeräts ausführbar ist.

Eine Validierung bedeutet also, dass das mindestens eine Zustandssignal als valide und/oder gültig identifiziert wird. So kann es beispielsweise sein, dass ein Zustandssignal nur deshalb logisch Null ist, weil die das Zustandssignal bereitstellende Signalleitung nicht mit dem Steuergerät verbunden ist oder unterbrochen ist. Logisch Null kann jedoch für die Auswertung dieses Zustandssignals durch die Steuermittel bedeuten, dass das Kraftfahrzeug steht. Beispielsweise kann das Zustandssignal ein Geschwindigkeitssignal sein, welches bei Geschwindigkeit = Null ein Indiz dafür ist, dass das Kraftfahrzeug steht und nicht fährt. Wenn die Steuermittel dann ausgehend von der Information "logisch Null" den Antrieb zur Verstellung des Kupplungsarms aus der Gebrauchsstellung freigeben, sodass dieser beispielsweise aus der Gebrauchsstellung in die Nichtgebrauchsstellung verstellt wird oder durch Lösen der Fixierung verstellbar ist, besteht erhebliche Unfallgefahr. Durch die Validierung jedoch wird für das Zustandssignal sichergestellt, dass es auch ein gültiges und für die Steuermittel auswertbares Zustandssignal ist.

Das als nicht valide qualifizierte mindestens eine Zustandssignal wird z.B. als ein ungültiges und für eine logische Auswertung durch die Steuermittel ungeeignetes Zustandssignal qualifiziert.

Das mindestens eine Zustandssignal hat an sich beispielsweise einen Wert oder Signalwert, der jedoch von den Steuermitteln nicht ausgewertet wird, beispielsweise zu einer logischen Verknüpfung mit einem anderen Zustandssignal, wenn das Zustandssignal insgesamt durch die Validierungseinrichtung als nicht gültig oder nicht valide erkannt und/oder qualifiziert worden ist.

Die Steuermittel blockieren aus Sicherheitsgründen eine Ansteuerung des Antriebs, wenn ein Zustandssignal als nicht valide qualifiziert ist. Das Zustandssignal kann einen Wert haben, der an sich innerhalb eines gültigen Bereiches liegt, beispielsweise zwischen einem oberen und einem unteren Grenzwert. Dennoch blockieren die Steuermittel eine Ansteuerung des Antriebs, wenn das Zustandssignal als nicht valide oder gültig qualifiziert ist.

Das Steuergerät weist vorzugsweise mindestens einen Zustandssignal-Eingang für das mindestens eine Zustandssignal, das ein erstes Zustandssignal bildet, sowie mindestens einen zweiten Zustandssignal-Eingang für ein zweites Zustandssignal auf, wobei die Steuermittel, insbesondere logische Verknüpfungsmittel der Steuermittel, zur logischen Verknüpfung und/oder Auswertung des ersten Zustandssignals mit dem zweiten Zustandssignal zur Ansteuerung des Antriebs ausgestaltet sind, wobei die Steuermittel die Ansteuerung des Antriebs blockieren, wenn die Validierungseinrichtung das mindestens eine erste Zustandssignal und/oder das mindestens eine zweite Zustandssignal als ein nicht valides Zustandssignal qualifiziert. Mithin wird also dadurch verhindert, dass eines der Zustandssignale in eine logische Verknüpfung und somit Auswertung einfließt, um den Antrieb anzusteuern. Wenn also beispielsweise das erste Zustandssignal signalisiert, dass das Kraftfahrzeug steht, und das zweite Zustandssignal signalisiert, dass eine Anhängersteckdose der Anhängekupplung nicht belegt ist, wird das Steuergerät grundsätzlich bei Eingang des Steuersignals den Antrieb ansteuern, zum Beispiel zu einem Verschwenken des Kupplungsarms in Richtung der Nichtgebrauchsstellung oder der Gebrauchsstellung. Wenn jedoch eines der Zustandssignale zwar an sich die vorgenannten Werte aufweist, jedoch dieses Zustandssignal durch die Validierungseinrichtung als nicht valide qualifiziert worden ist, blockiert das Steuermittel die Ansteuerung des Antriebs unabhängig vom jeweiligen Wert des Zustandssignals. Wenn also das erste und zweite Zustandssignal die vorgenannten Werte haben (Kraftfahrzeug steht, Anhängersteckdose der Anhängekupplung nicht belegt) jedoch mindestens eines der Zustandssignale als nicht gültig oder nicht valide erkannt worden ist, blockiert das Steuermittel die Ansteuerung des Antriebs. Zum Beispiel kann die Validierungseinrichtung anhand einer Plausibilitätsüberprüfung ermitteln, ob eines der Zustandssignale nicht valide ist, beispielsweise das erste Zustandssignal ein stehendes Fahrzeug signalisiert, obwohl ein Bewegungssensor des Steuergeräts typische, durch Fahrbewegungen erzeugte Bewegungen ermittelt.

Die Validierungseinrichtung ist vorzugsweise den Steuermitteln logisch und/oder elektrisch vorgeschaltet.

Vorzugsweise ist vorgesehen, dass die Validierungseinrichtung einer logischen Verknüpfung mindestens zweier Zustandssignale durch das Steuermittel vorgeschaltet ist.

Die Validierungseinrichtung kann eine einem jeweiligen Zustandssignal zugeordnete Validierungsinformation an die Steuermittel senden, wobei die Validierungsinformation das Zustandssignal, dem sie zugeordnet ist, als valide und/oder gültig oder nicht-valide und/oder ungültig qualifiziert. In Abhängigkeit von der Validierungsinformation blockieren die Steuermittel die Ansteuerung des Antriebs oder nicht. Wenn also die Validierungsinformation das Zustandssignal als nicht valide qualifizieren, blockieren die Steuermittel die Ansteuerung des Antriebs. Die Validierungsinformation kann beispielsweise als ein digitales Signal, als ein Übergabewert einer Software-Funktion etc. ausgestaltet sein.

Es ist auch möglich, dass die Validierungseinrichtung einen Filter bildet, der nur gültige und/oder valide Zustandssignale an die Steuermittel weiterleitet und/oder einen Wert eines Zustandssignals auf einen ungültigen Wert verändert, sodass die Steuermittel an dem ungültigen Wert erkennen können, dass das Zustandssignal nicht valide ist. In diesem Fall blockieren die Steuermittel die Ansteuerung des Antriebs. Beispielsweise kann die Validierungseinrichtung ein nicht valides Zustandssignal auf einen Wert außerhalb eines von den Steuermitteln als zulässig erkannten Grenzwertbereichs setzen, beispielsweise auf null oder oberhalb eines oberen Schwellenwerts.

Vorteilhaft kann vorgesehen sein, dass die Steuermittel zu einer logischen Verknüpfung und/oder Auswertung mindestens zweier Zustandssignale zur Ansteuerung des Antriebs ausgestaltet sind, von denen mindestens eines, vorzugsweise beide Zustandssignale oder alle Zustandssignale, durch die Validierungseinrichtung validiert ist, wobei die Steuermittel die Ansteuerung des Antriebs blockieren, wenn mindestens ein Zustandssignal der mindestens zwei Zustandssignale von der Validierungseinrichtung als ein nicht valides Zustandssignal qualifiziert ist.

Vorzugsweise sind die Zustandssignale von der Validierungseinrichtung oder durch die Validierungseinrichtung nicht oder noch nicht logisch miteinander verknüpft. Die Validierungseinrichtung führt also zum Beispiel keine logische Verknüpfung der Zustandssignale zur Ansteuerung des Antriebs durch, sondern validiert die Zustandssignale nur. Derart validierte oder als valide oder nicht valide qualifizierte Zustandssignale werden von den Steuermitteln dann logisch verknüpft und/oder ausgewertet. Die Validierungseinrichtung bildet also eine Vorstufe vor der logischen Verknüpfung oder Auswertung von Zustandssignalen durch die Steuerm ittel.

Die Validierungseinrichtung kann auch eine logische Verknüpfung von Zustandssignalen durchführen, nämlich um ein Zustandssignal als valide oder nicht valide zu qualifizieren. Die Validierungseinrichtung steuert jedoch den Antrieb nicht selbst an, sondern die Steuermittel, die in Abhängigkeit vom Wert des jeweiligen Zustandssignals oder der Kombination von Werten mindestens zweier Zustandssignale den Antrieb ansteuern. Dementsprechend kann vorteilhaft vorgesehen sein, dass die Validierungseinrichtung die Zustandssignale nicht logisch miteinander verknüpft oder ausschließlich zum Zwecke der Validierung mindestens eines der Zustandssignale logisch miteinander verknüpft.

Vorzugsweise ist der Kupplungsarm bezüglich des Halters anhand der Lagereinrichtung beweglich gelagert, beispielsweise schwenkbar und/oder verschieblich gelagert. Der Kupplungsarm kann dabei manuell zwischen der Gebrauchsstellung und der Nichtgebrauchsstellung verstellbar sein. Es ist auch möglich, dass der Kupplungsarm durch den Kupplungsarm-Antrieb zwischen diesen beiden Stellungen antreibbar ist.

Der Fixier-Antrieb kann ein Fixieren und/oder ein Lösen der Fixierung bewirken. Der Fixier-Antrieb kann beispielsweise mindestens ein Formschlusselement in Richtung einer den Kupplungsarm bezüglich des Halters fixierenden Stellung antreiben. Der Fixier-Antrieb kann beispielsweise ein Löseantrieb sein. Die Fixiereinrichtung ist vorzugsweise in Richtung der Fixierstellung, in der der Kupplungsarm bezüglich des Halters ortsfest fixiert ist, federbelastet. Die Fixiereinrichtung umfasst beispielsweise mindestens ein zum Fixieren des Kupplungsarms bezüglich des Halters vorgesehenes Formschlusselement. Das mindestens eine Formschlusselement ist beispielsweise in Richtung der Fixierstellung durch eine Federanordnung belastet. Das mindestens eine Formschlusselement ist durch den Fixier-Antrieb antreibbar. Der Fixier-Antrieb kann die Fixiereinrichtung vorzugsweise entgegen der Kraft der Federbelastung oder Feder lösen.

Vorteilhaft ist vorgesehen, dass das Steuergerät oder die Steuermittel zunächst den Fixier-Antrieb im Sinne eines Lösens der Fixierung des Kupplungsarms ansteuern und dann den Kupplungsarm-Antrieb im Sinne eines Verstellens des Kupplungsarms in Richtung der jeweils nachfolgenden Gebrauchsstellung oder Nichtgebrauchstellung ansteuern oder zu einer derartigen Ansteuerung ausgestaltet sind. Das Steuergerät oder die Steuermittel steuern weiterhin den Fixier-Antrieb derart an, dass die Fixiereinrichtung dann, wenn der Kupplungsarm dann die jeweils nachfolgende Gebrauchsstellung oder Nichtgebrauchstellung erreicht hat, den Kupplungsarm fixieren kann.

Es ist auch möglich, dass der Kupplungsarm an dem Halter lösbar befestigbar und durch die Fixiereinrichtung fixierbar ist. Wenn der Kupplungsarm am Halter befestigt ist, beispielsweise in eine Halteaufnahme des Halters eingesteckt ist, kann er durch die Fixiereinrichtung fixiert sein. Der Fixier-Antrieb ist in Abhängigkeit von dem mindestens einen Zustandssignal sozusagen blockiert oder freigegeben. Wenn also beispielsweise das Kraftfahrzeug fährt, steuert das Steuergerät den Fixier-Antrieb nicht im Sinne eines Lösens der Fixierung an.

In Bezug auf die Validierung sind verschiedene Validierungsmöglichkeiten vorteilhaft.

So kann beispielsweise vorgesehen sein, dass die Validierungseinrichtung das Zustandssignal zu seiner Validierung mit mindestens einem Grenzwert vergleicht. Nur wenn das Zustandssignal einen vorbestimmten Grenzwert überschreitet oder unterschreitet, gilt es als ein valides oder gültiges Zustandssignal, welches von den Steuermitteln ausgewertet wird oder werden darf. Somit können beispielsweise Signalschwankungen, die den tatsächlichen Zustand, den das Zustandssignal an sich repräsentieren sollte, nicht wiedergeben, durch die Validierungseinrichtung eliminiert werden oder sind eliminierbar.

Vorteilhaft kann vorgesehen sein, dass die mindestens eine Validierungsbedingung umfasst oder dadurch gebildet ist, dass nach mindestens einer Ansteuerung, insbesondere nach einer vorbestimmten oder einstellbaren Anzahl von Ansteuerungen, des mindestens einen Antriebs zum Verstellen des Kupplungsarms aus der Gebrauchsstellung mindestens eine Validierung, insbesondere mindestens eine Veränderung, des mindestens einen Zustandssignals erfolgen muss, damit das Zustandssignal als valides Zustandssignal qualifiziert ist. Wenn also beispielsweise der Kupplungsarm durch den Kupplungsarm-Antrieb einmal oder mehrere Male zwischen der Gebrauchsstellung und der Nichtgebrauchsstellung verstellt worden ist, muss durch eine Überprüfung oder Validierung des Zustandssignals sichergestellt worden sein, dass das Zustandssignal valide ist. So kann beispielsweise das Einschalten und/oder Ausschalten der Zündung des Kraftfahrzeugs jeweils eine Veränderung des Zustandssignals bewirken. Wenn also der Kupplungsarm beispielsweise einmal oder mehrere Male zwischen der Gebrauchsstellung und der Nichtgebrauchsstellung verstellt worden ist, muss die Zündung des Kraftfahrzeugs mindestens einmal eingeschaltet worden sein. An der Veränderung des Zustandssignals kann nämlich die Validierungseinrichtung ermitteln, dass tatsächlich das Zustandssignal nicht konstant ist, beispielsweise wegen Kabelbruchs oder dergleichen, sondern dass ein valides und somit für die Sicherheitsüberprüfung der Steuermittel geeignetes Zustandssignal vorliegt.

Erfindungsgemäß ist vorgesehen, dass die Validierungseinrichtung zur Validierung des Zustandssignals eine Veränderung des mindestens einen Zustandssignals überprüft. Es ist nämlich typisch, dass ein Zustandssignal bei wechselnden Bedingungen, die beim Fahrbetrieb des Kraftfahrzeugs typischerweise auftreten, einen Zustandswechsel oder eine Zustandsveränderung aufweist. So ändert sich beispielsweise ein Geschwindigkeitssignal regelmäßig beim Fahrbetrieb des Kraftfahrzeugs. Weiterhin wird das Kraftfahrzeug typischerweise eingeschaltet und ausgeschaltet, sodass ein die Betriebsbereitschaft des Kraftfahrzeugs indizierendes Zustandssignal sich ebenfalls verändert. Eine Veränderung des Zustandssignals wird von der Validierungseinrichtung als Kriterium oder Validierungsbedingung interpretiert, um ein Zustandssignal als valide oder gültig zu qualifizieren.

Die Veränderung eines Zustandssignals kann eine analoge Veränderung sein, d. h. dass beispielsweise ein Zustandssignal, welches die Fahrgeschwindigkeit des Kraftfahrzeugs repräsentiert, mehrere Werte einnehmen kann.

Das Zustandssignal kann aber auch ein digitales Signal sein. So kann beispielsweise vorgesehen sein, dass die mindestens eine Veränderung des Zustandssignals eine Veränderung zwischen logisch "Null" und logisch "Eins" umfasst oder dadurch gebildet ist.

Vorzugsweise ist vorgesehen, dass die mindestens eine Validierungsbedingung eine Zeitspanne beinhaltet, innerhalb derer das mindestens eine Zustandssignal mindestens eine Änderung aufweisen muss. Wenn also beispielsweise das Kraftfahrzeug über längere Zeit nicht mehr in Betrieb gesetzt worden ist, also die Zündung innerhalb der Zeitspanne der Validierungsbedingung nicht eingeschaltet wurde, wird das die Betriebsbereitschaft des Kraftfahrzeugs signalisierende Zustandssignal von der Validierungseinrichtung als nicht valide qualifiziert.

Diese zeitliche Validierungsbedingung oder Zeitspanne kann auch mit einer anderen Validierungsbedingung gekoppelt sein. Beispielsweise kann die zeitliche Validierungsbedingung mit der Validierungsbedingung gekoppelt sein, dass nach einer vorbestimmten Anzahl von Betätigungen des Antriebs eine Veränderung des Zustandssignals erfolgen muss, damit dieses von der Validierungseinrichtung als valides oder gültiges Zustandssignal identifiziert wird.

Ein bevorzugtes Konzept sieht vor, dass die mindestens eine Validierungsbedingung umfasst oder dadurch gebildet ist, dass das mindestens eine Zustandssignal einen Grenzwert überschreitet und anschließend unterschreitet oder unterschreitet und anschließend überschreitet. Somit wird beispielsweise vermieden, dass ein Zustandssignal als valide identifiziert wird, welches sich zwar ändert, jedoch den vorgenannten Grenzwert nicht überschreitet. Somit können kleinere Signalschwankungen, die beispielsweise fremd induziert sind und nicht den tatsächlichen Zustand repräsentieren, den das Zustandssignal an sich haben sollte, nicht dazu führen, dass das Zustandssignal von der Sicherungseinrichtung als valide oder gültig erkannt wird.

Ein zu validierendes Zustandssignal ist vorzugsweise ein analoges Signal, insbesondere ein Spannungssignal, oder digitales Signal.

Das Zustandssignal kann aber auch beispielsweise ein Bussignal sein, insbesondere eine Busnachricht, welches eine Zustandsinformation enthält. Das Bussignal wird von dem Steuergerät beispielsweise an einer Busschnittstelle, z.B. einer CAN-Busschnittstelle und/oder einer LIN-Busschnittstelle (CAN = Controller Area Network/ LIN = Local Interconnect Network), empfangen, die mit einem fahrzeugseitigen Datenbus gekoppelt oder koppelbar ist. In diesem Fall bildet die Busschnittstelle einen Zustandssignal-Eingang. Auf dem Datenbus sendet das Kraftfahrzeug beispielsweise Geschwindigkeitsinformationen und dergleichen andere Busnachrichten, die vom Steuergerät empfangen werden können. Auch eine Buskommunikation kann gestört oder fehlerhaft sein oder das Steuergerät kann fehlerhafte Informationen als Zustandssignale über die Busschnittstelle empfangen.

Vorteilhaft ist vorgesehen, dass das mindestens eine Zustandssignal eines oder mehrere der folgenden Signale umfasst oder dadurch gebildet ist:
- ein Betriebsbereitschaftssignal, insbesondere ein Zündung-an-Signal und/oder ein Klemme-15-Signal, wobei das Betriebsbereitschaftssignal eine Betriebsbereitschaft des Kraftfahrzeugs für einen Fahrbetrieb signalisiert, und/oder
- ein Geschwindigkeitssignal des Kraftfahrzeugs, welches eine Fahrgeschwindigkeit des Kraftfahrzeugs signalisiert, und/oder
- ein Öffnungssignal, das eine Offenstellung oder Schließstellung eines Karosserie-Verschlusselements des Kraftfahrzeugs, insbesondere einer Türe und/oder Heckklappe des Kraftfahrzeugs, signalisiert.

Das Zustandssignal kann aber auch ein Zustandssignal der Anhängekupplung selbst sein, beispielsweise ein Signal eines Sensors der Anhängekupplung sein. Der Sensor kann beispielsweise zur Ermittlung einer Endlage des Kupplungsarms, z.B. der Gebrauchsstellung oder Nichtgebrauchstellung, und/oder zur Erfassung einer Bewegung des Kupplungsarms und/oder einer Betätigung mindestens eines Antriebs der Anhängekupplung vorgesehen und/oder ausgestaltet sein.

Es ist auch möglich, dass die Validierungseinrichtung mindestens ein Zustandssignal durch eine Plausibilitätsüberprüfung überprüft. So kann beispielsweise vorgesehen sein, dass die mindestens eine Validierungsbedingung umfasst oder dadurch gebildet ist, dass das mindestens eine Zustandssignal im Zusammenhang mit mindestens einem weiteren Zustand des Kraftfahrzeugs plausibel ist. Wenn also beispielsweise ein Geschwindigkeitssignal empfangen wird, jedoch das Betriebsbereitschaftssignal signalisiert, dass das Kraftfahrzeug gar nicht betriebsbereit ist, zum Beispiel die Zündung ausgeschaltet ist, kann die Validierungseinrichtung das Geschwindigkeitssignal und/oder das Betriebsbereitschaftssignal als nicht valides Zustandssignal identifizieren.

Vorteilhaft ist vorgesehen, dass der weitere Zustand des Kraftfahrzeugs durch das Steuergerät anhand eines Sensorsignals und/oder eines weiteren Zustandssignals erfassbar oder erfasst ist. Wenn also beispielsweise das Zustandssignal ein Geschwindigkeitssignal ist, gleichzeitig aber einen Bewegungssensor des Steuergeräts signalisiert, dass das Kraftfahrzeug stillsteht, wird das Geschwindigkeitssignal als nicht valides Zustandssignal von der Validierungseinrichtung identifiziert.

Bevorzugt ist eine redundante Prüfung, bei der die Validierungseinrichtung ein Zustandssignal auf zwei unabhängige Methoden und/oder über zwei unabhängige Kanäle oder Eingänge prüft. Ein bevorzugtes Konzept sieht vor, dass die Validierungseinrichtung einen ersten Zustandssignal-Eingang und einen zweiten, von dem ersten Zustandssignal-Eingang verschiedenen Zustandssignal-Eingang für das mindestens eine Zustandssignal aufweist und den ersten Zustandssignal-Eingang und den mindestens einen zweiten Zustandssignal-Eingang zur Validierung des Zustandssignals auswertet und nur dann das Zustandssignal als valide interpretiert, wenn an dem ersten Zustandssignal-Eingang und dem mindestens einen zweiten Zustandssignal-Eingang erfasste, gegebenenfalls gewichtete, Werte identisch sind oder sich nur um eine vorbestimmte Toleranz voneinander unterscheiden. Es kann zum Beispiel vorgesehen sein, dass der erste Zustandssignal-Eingang zur Erfassung eines analogen Signals und der zweite Zustandssignal-Eingang zur Erfassung eines digitalen Signals ausgestaltet und/oder vorgesehen sind. Die Prüfeingänge können beispielsweise an einem Prozessor des Steuergeräts vorgesehen sein.

Es kann vorgesehen sein, dass das Steuergerät zunächst, also beispielsweise nach Inbetriebnahme des Steuergeräts, von einem validen Zustandssignal oder von validen Zustandssignalen ausgeht und eine Ansteuerung des Antriebs freigegeben ist, ohne dass zuvor die Validierungseinrichtung das Zustandssignal oder die Zustandssignale überprüft oder validiert.

Vorteilhaft ist das Steuergerät derart ausgestaltet ist, dass bei einer einzigen Ansteuerung oder einer vorbestimmten Anzahl von Ansteuerungen des Antriebs zum Verstellen des Kupplungsarms aus der Gebrauchsstellung und/oder der Nichtgebrauchsstellung ein weiteres Ansteuern des Antriebs nur nach vorheriger erfolgreicher Validierung des Zustandssignals möglich ist. Wenn also beispielsweise der Kupplungsarm einmal oder mehrere Male zwischen der Gebrauchsstellung und der Nichtgebrauchsstellung verstellt worden ist, muss wie bereits erwähnt mindestens einmal das eine Betriebsbereitschaft des Kraftfahrzeugs signalisierende Signal, zum Beispiel das sogenannte Klemme-15-Signal, eine Veränderung aufweisen. Der Bediener muss also beispielsweise eine Zündung des Kraftfahrzeugs einmal einschalten und ausschalten, damit die Validierungseinrichtung das betreffende Zustandssignal als valides Signal identifiziert und somit die Steuermittel die Ansteuerung des Antriebs zu einer weiteren Betätigung freigeben.

Ein bevorzugtes Konzept sieht z.B. vor, dass das Steuergerät einen dem Zustandssignal zugeordneten Validierungswert aufweist, der bei jeder Überprüfung des Zustandssignals, bei der das Zustandssignal als valide erkannt wird, inkrementiert oder auf einen Anfangswert zurückgesetzt wird und bei einer Ansteuerung des mindestens einen Antriebs zum Verstellen des Kupplungsarms aus der Gebrauchsstellung und/oder der Nichtgebrauchsstellung dekrementiert oder zurückgesetzt wird, und dass eine Ansteuerung des mindestens einen Antriebs nur dann möglich ist, wenn der Validierungswert größer als ein vorbestimmter Schwellwert ist, insbesondere größer null ist.

Für den Bediener komfortabel ist es, wenn die folgende Maßnahme realisiert ist.

Vorzugsweise ist vorgesehen, dass die Validierungseinrichtung eine Fehlermeldung, insbesondere eine optische und/oder akustische Fehlermeldung ausgibt, wenn das mindestens eine Zustandssignal als nicht valide erkannt ist. Dann kann beispielsweise überprüft werden, warum das Zustandssignal als nicht valides Zustandssignal erkannt worden ist. Im bereits erwähnten Beispiel des Zustandssignals für die Betriebsbereitschaft des Kraftfahrzeugs, welches mindestens eine Veränderung nach einer vorbestimmten Anzahl von Betätigungen des Antriebs der Anhängekupplung aufweisen muss, kann der Bediener beispielsweise einmal die Betriebsbereitschaft ausschalten und anschließend wieder einschalten, d. h. zum Beispiel die Zündung ausschalten und einschalten, damit das Zustandssignal als valide erkannt und somit ein weiterer Betrieb oder eine weitere Ansteuerung des Antriebs durch die Steuermittel des Steuergeräts freigegeben ist oder wird.

Der Begriff Anhängersteckdose in der vorliegenden Beschreibung und den Ansprüchen steht exemplarisch für eine elektrische Anschlussvorrichtung zum Anschließen elektrischer Komponenten, zum Beispiel Leuchten, des Anhängers oder Lastenträgers. Eine derartige Anschlussvorrichtung kann die Gestalt einer Anhängersteckdose haben. Aber auch eine sonstige Kontaktanordnung, mit der der Anhänger oder Lastenträger elektrisch verbindbar ist, soll unter dem Begriff Anhängersteckdose verstanden sein.

Wenn im Zusammenhang mit dem Steuergerät oder einer sonstigen Einrichtung, beispielsweise einer Bereitstellungseinrichtung oder Testeinrichtung, Verfahrensschritte oder Verfahrensmerkmale definiert sind, ist das erfindungsgemäße Verfahren zur Ausführung dieses Verfahrensschritts oder Verfahrensmerkmals ausgestaltet. Ohne weiteres weist das Steuergerät zur Ausführung von Verfahrensmerkmalen oder Verfahrensschritten geeignete Mittel auf, zum Beispiel Softwaremodule, insbesondere Prüfmodule, Funktionssoftwaremodul etc., die durch den Prozessor des Steuergeräts ausführbaren Programmcode enthalten, sodass bei Ausführung des Programmcodes das Steuergerät die jeweiligen Verfahrensmerkmale oder Verfahrensschritte leisten kann. Wenn zur Ausführung von Verfahrensschritten elektronische Mittel oder elektrische Mittel notwendig sind, zum Beispiel Signaleingänge oder Signalausgänge, leistungselektronische Komponenten oder dergleichen, sind diese bei dem Steuergerät vorgesehen.

Ein Speicher des Steuergeräts enthält vorzugsweise beim Betrieb durch den Prozessor wiederbeschreibbaren Arbeitsspeicher, z.B. sogenanntes RAM (= Random Access Memory), und vorteilhaft nichtflüchtigen Speicher, in welchem Software dauerhaft speicherbar ist, beispielsweise ein Funktionssoftwaremodul zum Betrieb des Steuergeräts. In diesem nichtflüchtigen Speicher sind vorzugsweise Funktionsparameter für das mindestens eine Funktionssoftwaremodul gespeichert. Der nichtflüchtige Speicher kann ein wiederbeschreibbarer Speicher sein, beispielsweise ein sogenannter Flash-Speicher, ein EPROM oder EEPROM.

Nachfolgend werden Ausführungsbeispiele der Erfindung anhand der Zeichnung erläutert. Es zeigen:
- Figur 1: eine schematische Seitenansicht eines Kraftfahrzeugs mit einer Anhängekupplung,
- Figur 2: die Anhängekupplung des Kraftfahrzeugs gemäß Figur 1 mit einem Steuergerät sowie angeschlossenen Kraftfahrzeugbusmodulen in schematischer Darstellung,
- Figuren 3a-3h: verschiedene Stellungen eines Kupplungsarms der Anhängekupplung bezüglich des Halters,
- Figur 4: einen Verlauf einer Testspannung zum Prüfen des Steuergeräts gemäß Figur 2,
- Figur 5: eine schematische Darstellung einer Testroutine mit veränderlichen Parameterwerten,
- Figur 6: eine schematische Darstellung einer Software-Testfunktion,
- Figur 7: ein Ablaufdiagramm einer Validierungsfunktion einer Validierungseinrichtung.

Ein Kraftfahrzeug 80 mit einer Karosserie 81 ist durch einen Motor 82, beispielsweise einen Elektromotor, einen Verbrennungsmotor oder eine Kombination davon, angetrieben. Der Motor 82 treibt in an sich bekannter Weise Räder 83 an. An das Kraftfahrzeug 80 kann ein Anhänger 180 anhand einer Anhängekupplung 10 angehängt werden.

Die Anhängekupplung 10 umfasst beispielsweise eine Trägeranordnung 11, die an der Karosserie 81 des Kraftfahrzeugs 80 befestigt ist, beispielsweise verschraubt, verschweißt oder dergleichen. An der Trägeranordnung 11, insbesondere einem Querträger derselben, ist ein Halter 12 der Anhängekupplung 10 befestigt, welcher beispielsweise zu einem festen Halten eines Kupplungsarms 14 ausgestaltet ist oder zum lösbaren Halten des Kupplungsarms 14 z.B. eine Steckaufnahme (nicht dargestellt) zum Einstecken eines Kupplungsarms 14 aufweisen kann.

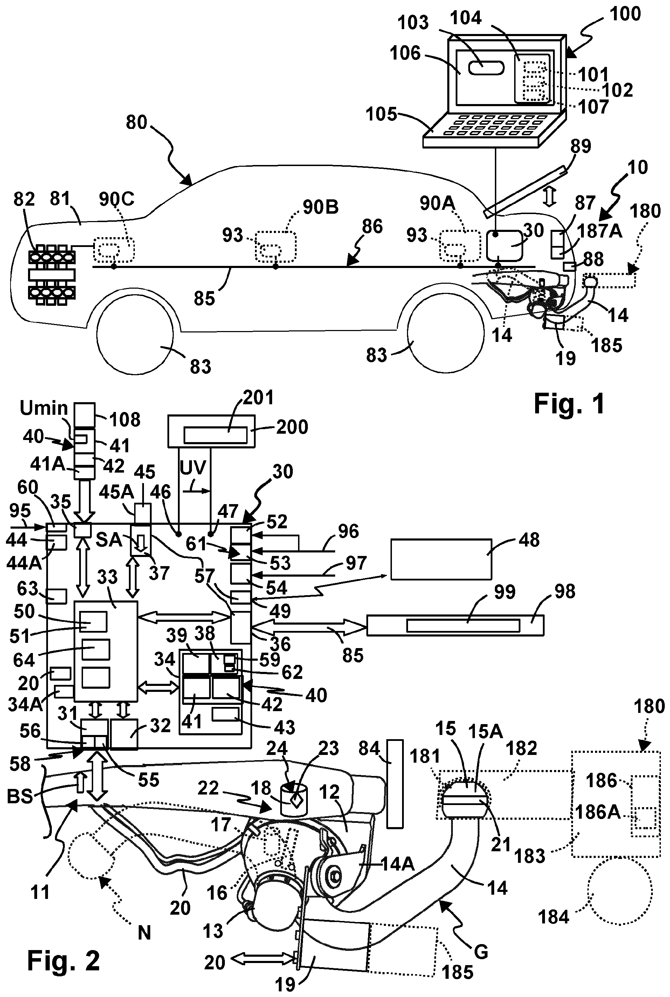

Vorliegend ist jedoch am Halter 12 eine Lagereinrichtung 13, die insbesondere ein Schwenklager, Schiebelager oder Schwenk-Schiebelager umfasst oder dadurch gebildet ist, vorgesehen, mit der der Kupplungsarm 14 zwischen einer in durchgezogenen Linien in Figur 2 dargestellten Gebrauchsstellung G und einer in gestrichelten Linien dargestellten Nichtgebrauchsstellung N verstellbar ist.

Der Kupplungsarm 14 ist anhand eines Kupplungsarm-Antriebs 18 zwischen der Gebrauchsstellung G und der Nichtgebrauchsstellung N antreibbar.

Der Kupplungsarm 14 trägt an seinem freien Ende eine Kupplungskugel 15, die exemplarisch für andersartige Kuppelkörper 15A, beispielsweise polygonale Kuppelelemente oder dergleichen steht. Die Kupplungskugel 15 und der die Kupplungskugel 15 tragende Abschnitt des Kupplungsarms 14 ist in der Gebrauchsstellung G vor einen Stoßfänger 84 vorverstellt, so dass der Anhänger 180 ankuppelbar ist. Beispielsweise ist eine Zugkugelkupplung 181 des Anhängers 180, welche an einer Deichsel 182 angeordnet ist, an das Kuppelelement bzw. die Kupplungskugel 15 ankuppelbar.

Der Anhänger 180 weist einen Grundkörper 183, beispielsweise eine Lademulde, einen Wohnwagenaufbau oder dergleichen, auf, der auf Rädern 184 auf einem Untergrund rollbar ist. Der Anhänger 180 weist weiterhin einen Steckverbinder 185 auf, über den eine Beleuchtungseinrichtung 186 des Anhängers 180 mit Strom versorgbar ist. Im Einzelnen nicht dargestellte Leuchten, beispielsweise Heckleuchten, Bremsleuchten, Blinker oder dergleichen, der Beleuchtungseinrichtung 186 können über eine entsprechende Ansteuerung bzw. Bestromung des Steckverbinders 185, der vorzugsweise individuelle Kontakte aufweist, mit Strom versorgt und angesteuert werden.

Zum Einstecken des Steckverbinders 185 des Anhängers 180 dient eine Anhängersteckdose 19. Diese kann beispielsweise am Kupplungsarm 14 oder einem separaten Halter 14a angeordnet sein.

Der Kupplungsarm 14 ist anhand einer Fixiereinrichtung 16 zumindest in der Gebrauchsstellung G fixierbar, beispielsweise formschlüssig fixierbar und/oder verklemmbar. Zum Lösen und/oder Schließen bzw. Verriegeln der Fixiereinrichtung 16 ist vorteilhaft ein Fixier-Antrieb 17 vorgesehen. Zweckmäßigerweise ist die Fixiereinrichtung 16 in die den Kupplungsarm 14 in der Gebrauchsstellung G verriegelnde Stellung federbelastet, so dass der Fixier-Antrieb 17 einen Löseantrieb darstellt.

Wenn der Fixier-Antrieb 17 aktiviert wird, wird die Fixierung des Kupplungsarms 14 bezüglich des Halters 12 gelöst, sodass der Kupplungsarm 14 aus der Gebrauchsstellung G in die Nichtgebrauchsstellung N verstellbar ist, beispielsweise verschwenkbar ist oder auch vom Halter 12 entfernt werden kann, wenn die in der Zeichnung nicht dargestellte Ausführungsform, bei der der Kupplungsarm 14 lösbar am Halter 12 befestigbar ist, realisiert ist.

Das Kraftfahrzeug 80 weist ein Bordnetz 86 mit einem digitalen Datenbus 85, beispielsweise einem CAN-Bus auf. An den Datenbus 85 sind Kraftfahrzeugbusmodule 90A, 90B, 90C angeschlossen, die nachfolgend auch allgemein als "Kraftfahrzeugbusmodule 90" bezeichnet werden. Beispielsweise handelt es sich bei dem Kraftfahrzeugbusmodul 90C um ein Motorsteuergerät zur Ansteuerung des Motors 82. Das Kraftfahrzeugbusmodul 90B wiederum ist ein Steuergerät für ein Fahrstabilitätsprogramm des Kraftfahrzeugs 80. Das Kraftfahrzeugbusmodul 90A steuert beispielsweise eine Beleuchtungseinrichtung 87 des Kraftfahrzeugs 80 sowie eine Abstandsmesseinrichtung 88 für einen Heckbereich bzw. einen Bewegungsraum hinter dem Kraftfahrzeug 80 (in Fahrtrichtung hinten) an. Beispielsweise umfasst die Beleuchtungseinrichtung 87 Bremsleuchten, Heck-Fahrbeleuchtungseinrichtungen, Rückfahrscheinwerfer, Blinkleuchten oder dergleichen. Die Abstandsmesseinrichtung 88 weist beispielsweise berührungslos arbeitende Abstandssensoren, insbesondere Ultraschallsensoren, auf. Ein Prozessor 93 eines jeweiligen Kraftfahrzeugbusmoduls 90A - 90C führt eines oder mehrere Steuerungsprogramme aus, um die jeweilige Funktionalität des Kraftfahrzeugbusmoduls 90A - 90C zu realisieren, beispielsweise eine Fahrstabilisierung, eine Motorsteuerung des Motors 82 oder dergleichen.

Die Anhängersteckdose 19 sowie die Antriebe 17, 18 sind über die Leitungsanordnung 20 mit einem Steuergerät 30 verbunden. In Figur 2 ist dies bezüglich der Anhängersteckdose 19 lediglich durch einen Doppelpfeil angedeutet. Das Steuergerät 30 steuert über die Leitungsanordnung 20 die Funktionen der Anhängekupplung 10 an, beispielsweise die jeweiligen Anschlusskontakte der Anhängersteckdose 19 und/oder den Antrieb 17 und/oder den Antrieb 18. So kann beispielsweise anhand des Steuergeräts 30 der Antrieb 17 zum Lösen der Fixiereinrichtung 16 und der Antrieb 18 zum Schwenken oder Verstellen des Kupplungsarms 14 zu einer Bewegung aus der Gebrauchsstellung G heraus, vorzugsweise auch zu einer Bewegung aus der Nichtgebrauchsstellung N heraus, angesteuert werden.

Ein zum Betreiben der Antriebe 17, 18 geeigneter Ausgang, beispielsweise eine elektronische Endstufe und/oder Leistungselektronik, ist z.B. an einer Steuer-Schnittstelle 31 vorgesehen.

Eine Schnittstelle 32 ist für die Anhängersteckdose 19 vorgesehen. Die Schnittstelle 32 bildet ein Koppelmittel zur Ankopplung der Anhängersteckdose 19.

Das Steuergerät 30 weist einen Prozessor 33 auf, der mit einem Speicher 34 kommuniziert. In dem Speicher 34 ist ein Funktionssoftwaremodul 38, beispielsweise ein Steuerungsprogramm, zur Steuerung und/Überwachung der Anhängekupplung 10, sowie ein Funktionssoftwaremodul 39, z.B. ein Kommunikationsprogramm, gespeichert, deren Programmcode von dem Prozessor 33 ausgeführt werden kann. Der Speicher 34 ist vorteilhaft ein nicht flüchtiger Speicher beispielsweise ein sogenannter Flash-Speicher, ein EPROM oder EEPROM. Der Prozessor 33 kann Zugriff auf flüchtigen Speicher 34A haben, beispielsweise ein RAM (=Random-Access Memory), um dort temporär Daten abzulegen.

Das Steuergerät 30 kann über eine Busschnittstelle 36 digital Daten auf dem Datenbus 85 senden oder empfangen. Dazu wird noch näheres erläutert.

Das Steuergerät 30 kommuniziert über den Datenbus 85 mit den Kraftfahrzeugbusmodulen 90A - 90C beispielsweise derart, dass es den aktuellen Betriebsstatus der Anhängekupplung 10 auf dem Datenbus 85 meldet. Wenn also beispielsweise die Anhängersteckdose 19 belegt ist, der Steckverbinder 185 eingesteckt ist, meldet dies das Steuergerät 30 auf dem Datenbus 85 an die Kraftfahrzeugbusmodule 90A - 90C. In diesem Fall wird beispielsweise das für die Fahrstabilisierung des Kraftfahrzeugs 80 zuständige Kraftfahrzeugbusmodul 90B eine andere Betriebsweise auswählen als dann, wenn kein Anhänger 180 an das Kraftfahrzeug 80 angekoppelt ist. Ebenfalls reagiert beispielsweise das Motorsteuergerät oder Kraftfahrzeugbusmodul 90C bei Anhängerbetrieb anders, indem es beispielsweise andere Lastprogramme oder Ansteuerungsprogramme zur Ansteuerung des Motors 82 betreibt.

Das Funktionssoftwaremodul 38 steuert beispielsweise die Funktionen der Anhängersteckdose 19 an derart, dass die Beleuchtungseinrichtung 186 des Anhängers 180 synchron mit der Beleuchtungseinrichtung 87 des Kraftfahrzeugs 80 arbeitet, d.h. dass beispielsweise auf derselben Seite Blinkleuchten 87A des Kraftfahrzeugs 80 und Blinkleuchten 186A des Anhängers 180 aktiviert werden, die Bremsleuchten aktiviert werden und dergleichen.

Das Funktionssoftwaremodul 38 steuert einen oder beide der Antriebe 17, 18 an.

So kann beispielsweise dann, wenn das Kraftfahrzeug 80 fährt, beispielweise eine Mindestgeschwindigkeit überschritten ist, die Funktion des Antriebs 17 und die Funktion des Antriebs 18 deaktiviert sein. Somit kann beispielsweise der Kupplungsarm 14 beim Fahrbetrieb des Kraftfahrzeugs 80 nicht zwischen der Gebrauchsstellung G und der Nichtgebrauchsstellung N verstellt werden. Somit reagiert also auch das Steuergerät 30 mit seinem Steuerungsprogram 38 auf den jeweiligen Betriebszustand des Kraftfahrzeugs 80.

Das Funktionssoftwaremodul 38 ist weiterhin mit einem Sensor 21 der Anhängekupplung 10 verbunden. Der Sensor 21 umfasst beispielsweise einen Schwenkwinkel des Anhängers 180 relativ zum Kraftfahrzeug 80. Der Sensor 21 ist beispielsweise an die Schnittstelle 32 über die Leitungsanordnung 20 angeschlossen oder anschließbar.

Die Antriebe 17, 18, die Anhängersteckdose 19 sowie der Sensor 21 bilden Funktionsbauteile 22, mit denen das Steuergerät 30 zusammenwirkt und in deren Zusammenhang das Steuergerät 30 bei Ausführung des Programmcodes des Funktionssoftwaremoduls 38 Ansteuerungsfunktionen und/oder Erfassungsfunktionen leistet.

Das Funktionssoftwaremodul 38 ist ferner zur Ansteuerung von Ausgabemitteln 44, beispielsweise optischen und/oder akustischen Ausgabemitteln, ausgestaltet. Das oder die Ausgabemittel 44 umfassen beispielsweise Leuchtmittel, insbesondere mindestens eine LED, einen Lautsprecher oder dergleichen.

Weiterhin ist eine Schnittstelle 37 für elektrisch anzuschließende Bauteile, die nicht unmittelbar Bestandteil der Anhängekupplung 10 sind, vorgesehen. An die Schnittstelle 37 kann beispielsweise als elektrisches Bauteil 45 ein Bedienelement 45A, z.B. ein Bedienschalter, insbesondere ein Tastschalter, angeschlossen sein.

Durch ein Betätigen des Bedienelements 45 ist beispielsweise das Steuergerät 30 zur Ansteuerung der Antriebe 17, 18 für eine Betätigung aus der Gebrauchsstellung G in Richtung der Nichtgebrauchsstellung N oder umgekehrt ausgestaltet. Mithin kann also ein Bediener beispielsweise an dem Bauteil 45 oder dem Bedienelement 45A, Schaltbefehle geben.

Ohne weiteres ist aber auch eine drahtlose Bedienung möglich, beispielsweise anhand einer Fernbedienung 48, die über eine Drahtlosschnittstelle 49, beispielsweise eine Bluetooth-Schnittstelle, mit dem Steuergerät 30 kommunizieren kann. Anhand der Fernbedienung 48 ist beispielsweise analog zum elektrischen Bauteil 45 oder Bedienelement 45A eine Ansteuerung des Steuergeräts 30 möglich.

Ferner ist aber auch eine Ansteuerung über die Busschnittstelle 36 beispielsweise aus dem Cockpit des Kraftfahrzeugs 80 möglich, so dass der Nutzer des Kraftfahrzeugs 80 beispielsweise auf dem Fahrersitz sitzend das Steuergerät 30 zur Betätigung eines oder beider Antriebe 17 oder 18 ansteuern kann.

Somit stellen die Schnittstelle 37, die Drahtlosschnittstelle 49 sowie die Busschnittstelle 36 jeweils einen Steuereingang 57 dar, über den ein Steuersignal SA sendbar ist, mit dem das Steuergerät 30 zum Ansteuerung des Kupplungsarm-Antriebs 18 und/oder des Fixier-Antriebs 17 im Sinne eines Verlassens der Gebrauchsstellung G oder der Nichtgebrauchsstellung N oder des Verstellens in Richtung der Gebrauchsstellung G oder Nichtgebrauchsstellung N ansteuerbar ist.

Bevorzugt ist das Bedienelement 45A beleuchtet, beispielsweise anhand der Ausgabemittel 44. Dabei ist es vorteilhaft, wenn das Steuergerät 30 ein Leuchtmittel 44A normalerweise zum Leuchten mit einer geringeren Helligkeit ansteuert, sodass ein Auffinden des Bedienelements 45A leicht fällt. Demgegenüber steuert das Steuergerät 30 das Leuchtmittel 44A mit einer größeren Helligkeit beispielsweise zur Ausgabe von Warnmeldungen, Statusmeldungen oder dergleichen an.

Des Weiteren sind Anschlüsse 46, 47 zur Stromversorgung des Steuergeräts 30 an demselben vorgesehen. An den Anschlüssen 46, 47 stellt das Kraftfahrzeug 80 beispielsweise eine Versorgungsspannung U bereit.

Prinzipiell wäre es möglich, dass die Funktionssoftwaremodule 38, 39 sozusagen speziell für das Steuergerät 30 hergestellt sind, d.h. dass beispielsweise Mindestspannungswerte und Maximalspannungswerte für die Versorgungsspannung U bei den Funktionssoftwaremodulen 38, 39 fest einprogrammiert sind. Dann ist aber das Steuergerät 30 nur eingeschränkt verwendbar, nämlich mit Anhängekupplungen des gleichen Typs wie die Anhängekupplung 10 und/oder mit Kraftfahrzeugen des gleichen Typs wie das Kraftfahrzeug 80, jedenfalls solchen Kraftfahrzeugen, die dieselben typischen Versorgungsspannungen U bereitstellen. Hier schafft die Erfindung Abhilfe.

Die Funktionssoftwaremodule 38, 39 sind sozusagen parametrierbar oder konfigurierbar, nämlich mit Funktionsparametern 41 bis 43. Die Funktionsparameter 41 und 42 gehören beispielsweise zu einem Parametersatz 40, mit dem das Funktionssoftwaremodul 38 programmierbar ist. Das Steuergerät 30 hat beispielsweise eine Parametrierschnittstelle 35 zum Empfang von Funktionsparametern, beispielsweise des Parametersatzes 40.

Die Funktionsparameter 41 bis 43 stehen nur beispielhaft für verschiedenartige Funktionsparameter, die durch Funktionssoftwaremodule verarbeitbar sind und, was nachfolgend deutlicher wird, beispielsweise durch eine Bereitstellungseinrichtung 100 für das Steuergerät 30 bereitstellbar sind. Die Bereitstellungseinrichtung 100 umfasst beispielsweise einen Personal-Computer, ein Notebook oder dergleichen.

Die Bereitstellungseinrichtung 100 weist einen Prozessor 103 sowie einen Speicher 104 auf. Anhand von Eingabemitteln 105, beispielsweise einer Tastatur, kann ein Bediener einen Eingangsdatensatz 107, zum Beispiel eine Eingangstabelle, mit Parameterwerten für die Funktionsparameter 41 bis 43 vorgeben. Der Prozessor 103 kann den Programmcode eines Extern-Prüfungsmoduls 102 ausführen und beispielsweise an Ausgabemitteln 106 der Bereitstellungseinrichtung 100 ausgeben, ob der Eingangsdatensatz 107 gültige Parameterwerte enthält. Das Extern-Prüfmodul 102 bildet eine Prüfeinrichtung 100 zur Überprüfung von Parameterwerten der Funktionsparameter 41 bis 43.

Wenn der Eingangsdatensatz 107 für die Funktionsparameter 41 bis 43 zulässige Parameterwerte enthält, d.h. Parameterwerte, mit denen die Funktionssoftwaremodule 38, 39 ordnungsgemäß arbeiten können, erzeugt die Bereitstellungseinrichtung 100 den Parametersatz 40, der die Funktionsparameter 41 bis 43 enthält sowie vorteilhaft weitere Funktionsparameter.

Vorteilhaft ist es, wenn die Bereitstellungseinrichtung 100 dem Parametersatz 40 noch eine Überprüfungsinformation 108 hinzufügt, anhand derer beispielsweise die Funktionssoftwaremodule 38, 39 oder die nachfolgend erläuterte Prüfeinrichtung 51, ermitteln können, dass der Parametersatz 40 ein überprüfter und geeigneter Parametersatz ist.

Vorteilhaft ist eine sozusagen eingangsseitige Parameterprüfung bei dem Steuergerät 30 vorgesehen. Als Prüfeinrichtung 51 dient ein Steuergerät-Prüfmodul 50, dessen Programmcode vom Prozessor 33 ausführbar ist. Das Steuergerät-Prüfmodul 50 überprüft den Parametersatz 40 dahingehend, dass seine Parameterwerte zulässige Parameterwerte für die jeweiligen Funktionsparameter 41 bis 43 zulässig sind. An dieser Stelle sei noch erwähnt, dass der Parametersatz 40 vorteilhaft für mindestens einen, vorzugsweise jeden, Funktionsparameter 41 bis 43 dessen Namen sowie dessen Parameterwert enthält.

Das Steuergerät-Prüfmodul 50 kann unabhängig von dem Extern-Prüfmodul 102 oder zusätzlich zu diesem vorgesehen sein. Das Steuergerät-Prüfmodul 50 kann einen Bestandteil beispielsweise eines oder beider Funktionssoftwaremodule 38, 39 bilden. Das Steuergerät-Prüfmodul 50 überprüft den Parametersatz 40 auf gültige Parameterwerte, d.h. dass beispielsweise ein Parameterwert für den Funktionsparameter 41 innerhalb eines vorbestimmten und vorab als zulässig geprüften Wertebereiches ist.

Die Funktionssoftwaremodule 38, 39 sind nämlich dahingehend überprüft, dass sie bei zulässigen Parameterwerten für die Funktionsparameter 41 bis 43 ordnungsgemäß und/oder sicher funktionieren.

Beispielsweise definiert der Funktionsparameter 41 eine Unterspannungsgrenze Umin für die Versorgungsspannung UV. Die Versorgungsspannung UV darf nicht unterhalb eines Parameterwerts Umin1 der Unterspannungsgrenze Umin sein, damit das Steuergerät 30 ordnungsgemäß arbeitet. Beispielsweise ist der Parameterwert Umin1 für den Funktionsparameter 41, also die Unterspannungsgrenze Umin, auf einen Wert von 10 V eingestellt. Wenn nun an den Anschlüssen 46, 47 eine größere Versorgungsspannung UV als die Unterspannungsgrenze Umin vorliegt, arbeitet das Steuerungsprogramm 38 ordnungsgemäß. Ansonsten gibt es an den Ausgabemitteln 44 beispielsweise eine Fehlermeldung aus, lässt z.B. eine Leuchtdiode leuchten. Es muss allerdings sichergestellt sein, dass das Steuerungsprogramm 38 die Unterspannungsgrenze zuverlässig erkennt, d.h. eine Unterspannung, die unterhalb der Unterspannungsgrenze Umin, die durch den Funktionsparameter 41 vorgegeben ist, liegt, erkennt.

Dazu ist das Funktionssoftwaremodul 38 sozusagen mit dem Parameterwert Umin1 für die Unterspannungsgrenze Umin geprüft. Beispielsweise wird eine Unterspannungsgrenze von 10 V als Parameterwert Umin1 des Funktionsparameters 41 vorgegeben.

Grundsätzlich möglich ist es aber auch, dass die Prüfeinrichtung 51 den Parameterwert des Funktionsparameters 41 auf einen gültigen Wert ändert, beispielsweise auf eine gültige Unterspannungsgrenze von beispielsweise 12 V.

Weiterhin ist es möglich, dass die Prüfeinrichtung 51 den Parameterwert des Funktionsparameters 41 im Zusammenhang und/oder in Wechselwirkung mit dem Parameterwert eines anderen Funktionsparameters überprüft, beispielsweise eines Funktionsparameters 41A, der einen maximalen Strom zur Bestromung eines der Antriebe 17 oder 18 definiert. Wenn der Funktionsparameter 41 eine niedrige Minimalspannung definiert, andererseits der durch den Funktionsparameter 41A definierte maximale Strom zu niedrig ist, um bei einer niedrigen Spannung gemäß Funktionsparameter 41 einen zuverlässigen Betrieb des Antriebs 17 oder 18 zu gewährleisten, erkennt die Prüfeinrichtung 51 mindestens einen der Funktionsparameter 41 oder 41A als unzulässig. Man sieht an diesem Beispiel, dass beispielsweise bei einem größeren Parameterwert des Funktionsparameters 41, also einer höheren minimalen Spannung, der maximale Strom gemäß dem Funktionsparameter 41A ausreichen würde. In diesem Fall würde die Prüfeinrichtung 51 beide Funktionsparameter 41 und 41A als zulässig qualifizieren.

Eine Testeinrichtung 200 ist mit den Anschlüssen 46, 47 elektrisch verbunden und stellt an diesen unterschiedliche Versorgungsspannungen UV bereit, die oberhalb und unterhalb der Unterspannungsgrenze Umin, die als Funktionsparameter 41 vorgegeben ist, liegen, zum Beispiel als Testspannung Utest. Nur dann, wenn die Unterspannungsgrenze Umin nicht unterschritten ist, darf das Steuergerät 30 beispielsweise die Antriebe 17 oder 18 antreiben. Bei zu kleinen Spannungen besteht eine Fehlergefahr, d.h. dass die Antriebe 17, 18 nicht mehr ordnungsgemäß betätigt werden können. In diesem Fall muss das Funktionssoftwaremodul oder Steuerungsprogramm 38 eine Fehlermeldung ausgeben.

Der Parameterwert 10 V ist also beispielswiese ein erster Parameterwert Umin1, der als Vorgabewert für den Funktionsparameterwert gültig ist. Zum Testen des Parameterwerts Umin1 stellt die Testeinrichtung 200 an ihren mit den Anschlüssen 46, 47 verbundenen Anschlüssen eine veränderliche Versorgungsspannung Utest bereit, die beispielsweise zunächst 11 V beträgt und dann inkrementell oder schrittweise, beispielsweise in 0,1-V-Schritten, über die Zeit t verringert wird, bis sie den Parameterwert Umin1 unterschreitet. Dann jedenfalls dürften die Antriebe 17, 18 nicht mehr betätigbar sein. Diese Testroutine ist eine sogenannte Hardware-in-the-Loop-Testroutine bzw. der Test wird als Hardware-in-the-Loop-Test bezeichnet.

Auch der nachfolgende Test ist ein Hardwaretest dieser Art, wobei jedoch in diesem Fall beispielsweise der Funktionsparameter 41 variiert wird, während die Versorgungsspannung UV fest auf einen Wert Utest eingestellt ist. Wenn also der Parameterwert Umin für den Funktionsparameter 41 13 V beträgt, müssen die Antriebe 17, 18 ansteuerbar sein. Eine Testmethode kann dabei vorsehen, dass beispielsweise der Parameterwert für den Funktionsparameter 41 zunächst unterhalb, insbesondere deutlich unterhalb, der Versorgungsspannung Utest eingestellt wird, z.B. auf 8V, und dann vergrößert wird. Dazu kann beispielsweise die Bereitstellungseinrichtung 100 nacheinander jeweils größere Funktionsparameterwerte Umintest für den Funktionsparameter 41 vorgeben, beispielsweise anfänglich 8V, 10 V oder dergleichen, und dann schrittweise, zum Beispiel in 0,1 V-Schritten, größere Parameterwerte. Auch dies ist ein inkrementeller Test oder Veränderungstest.

Man erkennt, dass diese Tests sehr aufwändig und zeitraubend sind, auf der anderen Seite aber auch sicherstellen, dass das Steuergerät 30 zuverlässig funktioniert.

Auf die vorgenannte Weise werden also zulässige Parameterwerte für die Funktionsparameter 41, 43 ermittelt, die dann, beispielsweise anhand des Eingangsdatensatzes 107, vorgegeben werden können. Die Prüfeinrichtungen 101 und 51 stellen sicher, dass die über den Eingangsdatensatz 107 vorgegebenen Parameterwerte zulässig sind, also im Rahmen der vorgenannten Tests überprüfte Parameter sind.

Auch ein Softwaretest, d.h. ein Test der Funktionssoftwaremodule 38, 39, ist vorteilhaft bereits für mindestens einen Parameterwert eines Funktionsparameters, vorzugsweise alle für einen Funktionsparameter zulässige Parameterwerte, erfolgt. Dabei werden beispielsweise einzelne Funktionen des Steuerungsprogramms des Softwaremoduls 38, beispielsweise Funktionen zur Ansteuerung des Antriebs 17 getrennt von den Funktionen zur Ansteuerung des Antriebs 18 geprüft. Beispielsweise werden Stromgrenzen, die vom Antrieb 17 oder 18 nicht überschritten werden dürfen, als Funktionsparameter vorgegeben.

Dabei werden softwareseitige Eingangsgrößen mit softwareseitigen Ausgangsgrößen verglichen und nur dann, wenn korrekte Ergebnisse vorliegen, der jeweilige Softwareteil oder die Teilfunktion der Software als geprüft freigegeben. Einen derartigen Test bezeichnet man als Software-in-the-Loop-Test. Dabei ist es auch möglich, dass Parameterwerte für die Funktionsparameter variiert werden und auf diesem Weg sichergestellt wird, dass der jeweilige Softwareteil in der Lage ist, mit dem Funktionsparameter ordnungsgemäß zu arbeiten.

Mit dem Funktionsparameter 42 kann beispielsweise eine Ansteuerung der Ausgabemittel 44 vorgegeben werden. Wenn also beispielsweise der Kupplungsarm 14 zwischen der Gebrauchsstellung G und der Nichtgebrauchsstellung N durch den Kupplungsarm-Antrieb 18 angetrieben wird, geben die Ausgabemittel 44 eine Information, beispielsweise eine optische und/oder akustische Information, aus. Mit dem Funktionsparameter 42 kann beispielsweise eine Leuchtfrequenz einer Leuchtdiode der Ausgabemittel 44 eingestellt werden. Auch in diesem Zusammenhang ist eine Überprüfung des jeweiligen Parameterwerts für den Funktionsparameters 42 vorteilhaft. Wenn der Parameterwert beispielsweise eine zu kleine Frequenz für ein Blinken der Leuchtdiode vorgeben würde, wird dieser Parameterwert von den Prüfeinrichtungen 51 und/oder 101 als ungültig erkannt.

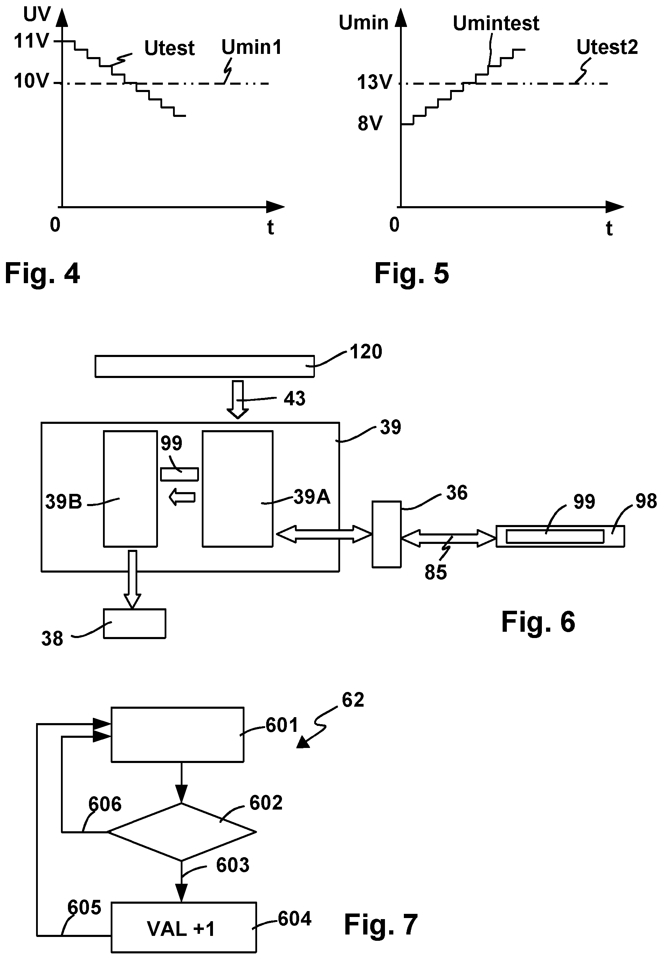

So sind beispielsweise Frequenzen aus einem Frequenzbereich als Parameterwert für den Funktionsparameter 42 auswählbar, für die das Steuergerät 30 und/oder das Funktionssoftwaremodul 38 anhand eines Tests in der Art des vorgenannten Tests geprüft ist. Beispielsweise können Parameterwerte für die jeweilige Frequenz anhand eines Tests in der Art des im Zusammenhang mit Figur 5 erläuterten Tests geprüft werden, indem nämlich die Bereitstellungseinrichtung 100 unterschiedliche Parameterwerte für den Funktionsparameter 42 mit den entsprechenden Frequenzen aus dem zu testenden Frequenzbereich vorgibt und dabei überprüft wird, ob die Ausgabemittel 44 mit einem jeweiligen Frequenzwert für den Funktionsparameter ordnungsgemäß funktionieren, also beispielsweise die optische oder akustische Information korrekt ausgegeben wird.

Mit dem Funktionsparameter 43 kann beispielsweise die Buskommunikation auf dem Datenbus 85 beeinflussbar sein. Ein Softwaretest des Funktionssoftwaremoduls 39, dem Kommunikationsprogramm, insbesondere eine Überprüfung von Parameterwerten des Funktionsparameters 43 im Zusammenhang mit dem Funktionssoftwaremodul 39, ist vorteilhaft. So kann beispielsweise durch einen Parameterwert für den Funktionsparameter 43 definiert werden, ob eine Busnachricht 98, die eine Geschwindigkeitsinformation 99 des Kraftfahrzeugs 80 enthält, vom Funktionssoftwaremodul 39 empfangen und an das Funktionssoftwaremodul 38 übermittelt wird oder vom Funktionssoftwaremodul 39 ignoriert oder verworfen wird.

Beispielsweise ist, insbesondere in einer Software-Testumgebung, ein Testprogramm 120 vorgesehen, welches verschiedene Parameterwerte für den Funktionsparameter 43 an das Kommunikationsprogramm oder Funktionssoftwaremodul 39 übergibt, siehe dazu Figur 6. Eine Teilfunktion 39A des Funktionssoftwaremoduls 39 ist mit der Busschnittstelle 36 verbunden und bedient dieselbe.

Wenn der Parameterwert für den Funktionsparameter 43 definiert, dass die Geschwindigkeitsinformation 99 aus der Busnachricht 98 auszulesen und an das Funktionssoftwaremodul 38 zu übergeben ist, gibt die Teilfunktion 39A die Geschwindigkeitsinformation 99 oder einen daraus generierten Geschwindigkeitswert an eine Teilfunktion 39B weiter, welche die Geschwindigkeitsinformation 99 oder den Geschwindigkeitswert an das Funktionssoftwaremodul 38 übermittelt.

Wenn jedoch der Parameterwert für den Funktionsparameter 43 definiert, dass die Busnachricht 98 bzw. Geschwindigkeitsinformation 99 zu ignorieren ist, wird durch den Test überprüft, ob die Teilfunktion 39A die Geschwindigkeitsinformation 99 wie erwartet nicht an die Teilfunktion 39B weitergibt oder eben doch an die Teilfunktion 39B weitergibt, was als Fehler erkannt wird.

Der vorgenannte Test überprüft das Funktionssoftwaremodul 39 als Ganzes. Es ist aber auch möglich, dass das Testprogramm 120 nur die Teilfunktion 39A überprüft, die dann in einer sozusagen isolierten Testumgebung geprüft wird. Die allein und isoliert getestete Teilfunktion 39A muss nämlich in Abhängigkeit vom eingestellten Parameterwert für den Funktionsparameter 43 als Übergabewert oder Rückgabewert die Geschwindigkeitsinformation 99 oder einen daraus generierten Geschwindigkeitswert ausgeben, wobei der Übergabewert oder Rückgabewert den Eingangswert für die Teilfunktion 39B bildet.

Zur Ansteuerung des Kupplungsarm-Antriebs 18 dienen Steuermittel 59 des Funktionssoftwaremoduls 38, beispielsweise eine entsprechende Steuerungsfunktion, deren Programmcode vom Prozessor 33 ausführbar ist.

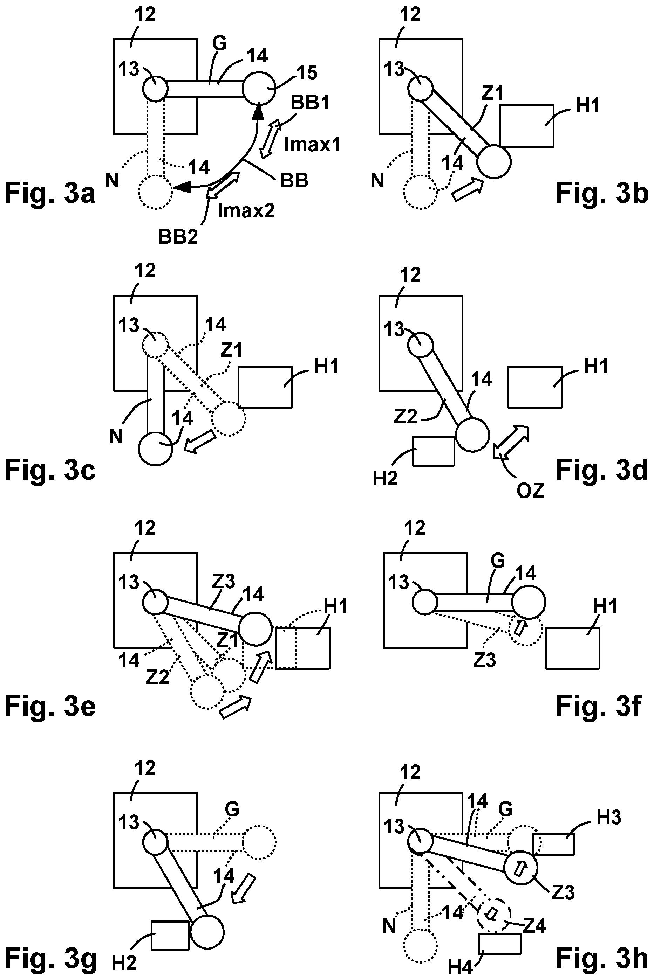

Wenn das Steuergerät 30 an einem der Steuereingänge 57 einen Schaltbefehl SA zum Verstellen des Kupplungsarms 14 zwischen der Gebrauchsstellung G und der Nichtgebrauchsstellung N erhält, steuert es die Antriebe 17, 18 entsprechend an, und löst beispielsweise zunächst eine Fixierung des Kupplungsarms 14 mit dem Antrieb 17 und schwenkt oder verstellt anschließend den Kupplungsarm 14 anhand des Antriebs 18, um nach Abschluss der Verstellbewegung in der jeweils erreichten Gebrauchsstellung G oder Nichtgebrauchsstellung N wieder die Fixiereinrichtung 16 zur Fixierung des Kupplungsarms 14 anzusteuern. Schematisch ist diese Bewegungsfolge in Figur 3a angedeutet.

Nun kann sich aber auf der Bewegungsbahn BB zwischen der Nichtgebrauchsstellung N und der Gebrauchsstellung G ein Hindernis H1 befinden. Dann schlägt der Kupplungsarm 14 an das Hindernis H1 an und erreicht nur eine der Gebrauchsstellung G vorgelagerte Zwischenstellung Z1.

Das Steuergerät 30 weist Hinderniserkennungsmittel 58 auf, um ein Anschlagen des Kupplungsarms 14 an einem Hindernis zu erkennen.

Die Hinderniserkennungsmittel 58 umfassen beispielsweise eine Stromesseinrichtung, insbesondere einen Stromsensor 56, sowie einen Bewegungssignaleingang 55, z.B. an der Schnittstelle 31, sowie eine Softwarefunktion oder Teilfunktion des Steuerungsprogramms 38, welche Informationen des Stromsensors 56 sowie die am Bewegungssignaleingang 55 erhaltenen Informationen auswertet, um daran zu erkennen, ob der Kupplungsarm 14 an einem Hindernis anschlägt oder nicht.

Der Stromsensor 56 und/oder der Bewegungssignaleingang 55 und/oder der Bewegungssensor 23 bilden Bestandteile einer Sensoranordnung 24, die bezüglich des Stromsensors 56 des Bewegungssignaleingangs 55 einen Bestandteil des Steuergeräts 30 bilden, hinsichtlich des Bewegungssensors 23 ein Bestandteil der Anhängekupplung 10. Der Stromsensor 56 umfasst beispielsweise einen Messwiderstand.

Der Bewegungssignaleingang 55 ist zum Empfang eines Bewegungssignals BS eines Bewegungssensors 23, z.B. eines Drehsensor, insbesondere eines Hall-Sensors, des Kupplungsarm-Antriebs 18 ausgestaltet. Der Bewegungssensor 23 gibt beispielsweise ein Impulssignal aus, welches mit der Drehbewegung des Antriebs 18 korreliert und somit eine jeweilige Stellung des Antriebs 18 signalisiert. Wenn sich also der Antrieb 18 drehen und den Kupplungsarm 14 entsprechend verstellen kann, empfängt das Steuergerät 30 am Bewegungssignaleingang 55 das Bewegungssignal BS als eine Impulsfolge. Wenn jedoch der Kupplungsarm 14 sich nicht mehr bewegen oder drehen kann, beispielsweise an einem Hindernis anschlägt, wechselt das Signalniveau des Bewegungssignals BS nicht mehr.

Wenn also beispielsweise der Kupplungsarm 14 an dem Hindernis H1 anschlägt (Figur 3b), steigt ein Stromfluss durch den Kupplungsarm-Antrieb 18, beispielsweise dessen Elektromotor, an, was anhand des Stromsensors 56 erkennbar ist. Zudem zeigt das Bewegungssignal BS, dass sich der Antrieb 18 und somit der Kupplungsarm 14 nicht mehr bewegen, der Kupplungsarm 14 also beispielsweise eine Zwischenstellung Z1 einnimmt. Eine entsprechende Softwareroutine des Funktionssoftwaremoduls 38, welche einen Bestandteil der Steuermittel 59 oder der Hinderniserkennungsmittel 58 bildet, erkennt somit den Stillstand des Kupplungsarms 14.

Wenn der Kupplungsarm 14 an einem Hindernis bei seiner Bewegung aus der Gebrauchsstellung G in die Nichtgebrauchsstellung N oder umgekehrt anschlägt, also beispielsweise gemäß der Situation gemäß Figur 3b, steuern die Steuermittel 59 regelmäßig oder in einem Normalbetrieb den Kupplungsarm-Antrieb 18 im Sinne einer Bewegung des Kupplungsarms 14 in die Ausgangsstellung zurück, im vorliegenden Fall also in Richtung der Nichtgebrauchsstellung N, von der aus gemäß Figur 3a, 3b der Kupplungsarm 14 heraus bewegt worden ist. Das ist in Figur 3c angedeutet.

Nun kann aber die Situation gemäß Figur 3d auftreten, dass nämlich der Kupplungsarm 14 nicht mehr in die Ausgangsstellung zurückverstellbar ist, weil er an einem Hindernis H2 anschlägt und dann eine Zwischenstellung Z2 einnimmt. Wiederum steigt der Strom durch den Antriebsmotor des Kupplungsarm-Antriebs 18 an und zeigt das Bewegungssignal BS an, dass sich der Kupplungsarm 14 nicht mehr bewegt, was durch die Hinderniserkennungsmittel 58 als ein Anschlagen des Kupplungsarms 14 an einem Hindernis erkannt wird.

Nun kann ein Szenario vorsehen, dass die Steuermittel 59 den Kupplungsarm-Antrieb 18 zum Anhalten in der Zwischenposition Z2 ansteuern. Die Steuermittel lassen den Kupplungsarm 14 in der Zwischenposition Z2 sozusagen stehen. Der Bediener hat dann Gelegenheit, beispielsweise das Hindernis H2 aus dem Weg zu räumen.

Nach dem Anhalten ist es möglich, dass ein weiteres Steuersignal SA erforderlich ist, damit die Steuermittel 59 den Kupplungsarm-Antrieb 18 zum weiteren Verstellen des Kupplungsarms 14 an dem Ort des Hindernisses H2 vorbei ansteuern.

Nach dem Anhalten kann aber auch vorgesehen sein, dass die Steuermittel 59 nach einer vorbestimmten Wartezeit dann den Kupplungsarm-Antrieb 18 dann weiter im Sinne eines Überwindens des Hindernisses H2 und/oder in Richtung der Ausgangsstellung ansteuern, hier also der Nichtgebrauchsstellung N, ohne dass ein weiteres Steuersignal SA erforderlich ist und/oder von den Steuermitteln 59 ausgewertet wird, ähnlich wie in Figur 3c angedeutet.

Ein anderes Szenario sieht vor, dass die Steuermittel 59 den Kupplungsarm 14 ausgehend von der Zwischenstellung Z2 (Figur 3d) zu einer Bewegungsumkehr wieder in Richtung der Gebrauchsstellung G ansteuern, also auf das Hindernis H1 zu. Auch hierzu ist es vorteilhaft nicht erforderlich, dass ein weiteres Steuersignal SA gegeben wird, sondern dass die Steuermittel 59 sozusagen automatisch die vorgenannte Bewegung ansteuern. Es kann nämlich sein, dass nach dem erstmaligen Anschlagen am Hindernis H1 das Hindernis H1 entfernt worden ist und der Kupplungsarm 14 dann an dem Ort, wo das Hindernis H1 war, vorbei in Richtung der Gebrauchsstellung G bewegbar ist, siehe dazu beispielsweise Figuren 3e und 3f.

Möglich ist aber auch ein Szenario, dass das Hindernis H1 noch immer in der Bewegungsbahn BB von der Zwischenstellung Z2 zur Gebrauchsstellung G ist und der Kupplungsarm 14 am Hindernis H1 nochmals anschlägt. Dann ist es vorteilhaft, wenn die Steuermittel 59 den Kupplungsarm-Antrieb 18 wieder zu einer Bewegungsumkehr in Richtung des Hindernisses H2 oder der Nichtgebrauchsstellung N ansteuern, sodass der Kupplungsarm 14 vom Hindernis H1 weg bewegt wird. Es könne nämlich hier wiederum der Fall sein, dass das Hindernis H2 dann nicht mehr im Bewegungsweg oder der Bewegungsbahn BB zur Nichtgebrauchsstellung N ist, beispielsweise weil ein Bediener seinen Fuß, der ehemals das Hindernis H2 dargestellt hat, zwischenzeitlich aus der Bewegungsbahn BB des Kupplungsarms 14 entfernt hat.

Weiterhin möglich ist ein Szenario, dass die Steuermittel 59 den Kupplungsarm-Antrieb 18 zu einer oszillierenden Bewegung OZ des Kupplungsarms 14 zwischen den Hindernissen H1 und H2 ansteuern (angedeutet in Figur 3d). Dabei ist es möglich, dass diese Oszillationsbewegung OZ mehrfach durchgeführt wird, beispielsweise zweimal oder dreimal, sodass jede dieser Bewegungen sozusagen einen Versuch darstellt, dass jeweils im Weg befindliche Hindernis H1 oder H2 zu beseitigen oder zu überwinden. Möglich ist beispielsweise, dass der Kupplungsarm 14 an einem relativ weichen Hindernis H1 oder H2 anschlägt, zum Beispiel einem Gebüsch, einem Zweig oder dergleichen, und dieses Hindernis sozusagen nachgibt, wenn der Kupplungsarm 14 mehrfach versucht, an dem Hindernis vorbei zu kommen.

Die Figuren 3g-3h zeigen schematisch vergleichbare Bewegungsabläufe bei der Verstellbewegung des Kupplungsarms 14 aus der Gebrauchsstellung G in die Nichtgebrauchsstellung N. Auch hier ist es möglich, dass beispielsweise das Hindernis H2 in der Bewegungsbahn des Kupplungsarms 14 ist und die Steuermittel 59 den Kupplungsarm-Antrieb 18 zu einer Bewegungsumkehr in Richtung der Gebrauchsstellung G zurück ansteuern. Regelmäßig ist dabei vorgesehen, dass der Kupplungsarm 14 bis in die Gebrauchsstellung G hinein zurück verstellt wird und nicht in einer Zwischenposition stehen bleibt.

Möglich ist es aber auch, dass die Steuermittel 59 in der Situation gemäß Figur 3g den Kupplungsarm 14 sozusagen für eine vorbestimmte Wartezeit stehen lassen, den Kupplungsarm-Antrieb 18 also für eine vorbestimmte Zeit, beispielsweise wenige Sekunden, abschalten. Dann hat ein Bediener Gelegenheit, das Hindernis H2 aus dem Weg zu räumen. Sodann machen die Steuermittel 59 sozusagen einen weiteren Versuch, den Kupplungsarm 14 in die Nichtgebrauchstellung N zu verstellen, steuern also beispielsweise den Kupplungsarm-Antrieb 18 weiter im Sinne einer Bewegung in Richtung der Nichtgebrauchsstellung N an.

Figur 3h zeigt ein ähnliches Szenario wie Figur 3d, dass nämlich der Kupplungsarm 14 auf dem Bewegungsweg oder der Bewegungsbahn BB von der Gebrauchsstellung G in die Nichtgebrauchsstellung N an einem Hindernis H4 anschlägt und eine Zwischenposition Z4 einnimmt, was die Hinderniserkennungsmittel 58 erkennen. Sodann steuern die Steuermittel 59 den Kupplungsarm-Antrieb 18 zu einer Bewegungsumkehr in Richtung der Gebrauchsstellung G an, wo sich aber zwischenzeitlich ein weiteres Hindernis, beispielsweise ein Hindernis H3 befindet, sodass sich der Kupplungsarm 14 nur bis zu einer Zwischenposition Z3 bewegen lässt und am Hindernis H3 anschlägt.

Auch in dieser Situation ist es möglich, dass die Steuermittel 59 den Kupplungsarm-Antrieb 18 zu einer Bewegungsumkehr ansteuern, sodass dieser ausgehend von der Zwischenposition Z3 den Kupplungsarm 14 in Richtung der Nichtgebrauchsstellung N bewegt. Diese Nichtgebrauchsstellung N erreicht der Kupplungsarm 14, wenn kein Hindernis H4 in seiner Bewegungsbahn ist. Ansonsten steuern die Steuermittel 59 den Kupplungsarm-Antrieb 18 wieder zu einer Bewegungsumkehr in Richtung der Gebrauchsstellung G an. Mithin ist also auch hier eine Oszillationsbewegung OZ vorhanden.

Durch Vorgabe eines entsprechenden Parameterwerts für einen Funktionsparameter, den die Steuermittel 59 auswerten, kann beispielsweise die Anzahl derartiger Oszillationsbewegungen OZ einstellbar sein.

Ebenfalls einstellbar kann sein, wie die Steuermittel 59 den Kupplungsarm-Antrieb 18 im Falle eines Hindernisses ansteuern, beispielsweise ob eine Wartezeit vor einem Versuch, das Hindernis zu überwinden, eingehalten wird, ob der Kupplungsarm 14 bei einem Hindernis regelmäßig zu einer Bewegungsumkehr in Richtung der Ausgangsstellung angesteuert wird oder nur für eine kurze Bewegung vom Hindernis weg. Diese Aufzählung ist nicht abschließend und vollständig.

Bevorzugt ist es, wenn die Hinderniserkennungsmittel 58 die Stromwerte des Stromsensors 56 in Abhängigkeit von der Versorgungsspannung UV auswerten. Bei niedriger Versorgungsspannung UV fließt nämlich zum Betreiben des Kupplungsarm-Antriebs 18 ein höherer Strom als bei höherer Versorgungsspannung UV. Mithin ist es also vorteilhaft, wenn die Hinderniserkennungsmittel 58 zu einer dynamischen Auswertung der Stromwerte des Stromsensors 56 ausgestaltet sind.

Bevorzugt ist es, wenn die Steuermittel 59 bei einem Loslaufen des Kupplungsarm-Antriebs 18 für eine vorbestimmte, insbesondere sehr kurze, Zeitspanne Stromwerte nicht analysieren, sodass die zum Loslaufen notwendigen Losbrechmomente aufgebracht werden können. Beispielsweise spielt es für eine Zeitspanne von wenigen 100 ms keine Rolle, welcher Strom durch den Kupplungsarm-Antrieb 18 fließt, wenn der Kupplungsarm 14 aus der Gebrauchsstellung G oder Nichtgebrauchsstellung N herausverstellt wird.

Möglich ist es auch, dass unterschiedlichen Bewegungsrichtungen des Kupplungsarms und/oder unterschiedlichen Abschnitten der Bewegungsbahn BB des Kupplungsarms zwischen der Gebrauchsstellung und der Nichtgebrauchsstellung unterschiedliche maximale Stromwerte für die Hinderniserkennung zugeordnet sind.

So können zwei oder weiteren Bewegungsabschnitten BB1, BB2 der Bewegungsbahn BB des Kupplungsarms 14 unterschiedliche Strom-Grenzwerte Imax1 und Imax2 zugeordnet sein, bei denen die Hinderniserkennungsmittel 58 das Anschlagen des Kupplungsarms 14 an ein Hindernis erkennen. So liegt beispielsweise der Bewegungsabschnitt BB1 im Wesentlichen in einem freien Bereich vor dem Stoßfänger 84 (hinter dem Kraftfahrzeug 80), der Bewegungsabschnitt BB2 hingegen im Wesentlichen im Bereich zwischen der Karosserie 81 und dem Stoßfänger 84. Auf dem Bewegungsabschnitt BB1 sind die Hinderniserkennungsmittel 58 vorzugsweise sensibler, z.B. weil in diesem freien Bereich der Bewegungsbahn BB die Wahrscheinlichkeit eines Hindernisses größer ist. Dementsprechend ist der Strom-Grenzwert Imax1 kleiner als der Strom-Grenzwert Imax2. Die Strom-Grenzwerte können beispielsweise als Parameterwerte für entsprechende Funktionsparameter, die die Hinderniserkennungsmittel 58 auswerten, im Speicher 34 gespeichert und/oder durch die Bereitstellungseinrichtung 100 bereitgestellt werden.

Es ist auch möglich, dass als Parameterwerte Faktoren hinterlegt sind, mit denen die entsprechenden Strom-Grenzwerte berechenbar sind, beispielsweise in Abhängigkeit vom zurückgelegten Weg des Kupplungsarms 14 entlang der Bewegungsbahn BB und/oder in Abhängigkeit von der Versorgungsspannung UV und/oder in Abhängigkeit von der Bewegungsrichtung des Kupplungsarms 14 von der Nichtgebrauchsstellung N in die Gebrauchsstellung G oder umgekehrt von der Gebrauchsstellung G in die Nichtgebrauchsstellung N. Weiteren Einflussfaktoren stellen beispielsweise auch die Gewichtskraft des Kupplungsarms 14 oder mechanische Widerstände eines Antriebs des Kupplungsarms 14, beispielsweise eines Getriebes, dar. Auch in Abhängigkeit von mechanischen Einflussfaktoren auf der Bewegungsbahn zwischen der Gebrauchsstellung G und der Nichtgebrauchstellung N kann ein jeweiliger Strom-Grenzwert dynamisch ermittelbar sein.

Auf einen Steuerbefehl SA hin, der beispielsweise am Bedienelement 45A, der Fernbedienung 48 oder über die Busschnittstelle 36 vom Steuergerät 30 empfangen wird, steuern die Steuermittel 59 regelmäßig die Antriebe 17, 18 zur Verstellung des Kupplungsarms 14 in die jeweils nachfolgende Gebrauchsstellung G oder Nichtgebrauchstellung N an, allerdings erst nach einer Überprüfung mindestens eines Zustands, vorzugsweise mehrerer Zustände, insbesondere des Kraftfahrzeugs 80.

Das Steuergerät 30 weist Zustandssignal-Eingänge 52, 53, 54 sowie 60 zur Erfassung von Zuständen des Kraftfahrzeugs 80 auf.

An den Zustandssignal-Eingängen 52 und 53 liegt das Zustandssignal 96 an, welches eine Betriebsbereitschaft des Kraftfahrzeugs 80 signalisiert, beispielsweise ob dessen Zündung für den Motor 82 eingeschaltet ist oder dergleichen. Das Zustandssignal 96 bildet also ein Betriebsbereitschaftssignal.

Am Zustandssignal-Eingang 54 liegt ein Zustandssignal 97 an, welches die Fahrgeschwindigkeit des Kraftfahrzeugs 80 signalisiert, somit also ein Geschwindigkeitssignal ist.

Am Zustandssignal-Eingang 60 liegt ein Zustandssignal 95 an, welches ein Öffnungssignal ist, das eine Offenstellung oder Verschlussstellung eines Karosserie-Verschlusselements des Kraftfahrzeugs 80, beispielsweise einer Heckklappe 89 desselben, signalisiert.

Ferner kann auch der Bewegungssignaleingang 55 ein Zustandssignal-Eingang sein und/oder der Validierungseinrichtung 61 zugeordnet sein. Wenn also das Bewegungssignal BS am Bewegungssignaleingang 55 eine Bewegung des Kupplungsarms 14 signalisiert, jedoch das Signal des Stromsensors 56 nicht damit korreliert, kann die Validierungseinrichtung 61 beispielsweise das Bewegungssignal BS als nicht valides oder ungültiges Signal qualifizieren.

Die Steuermittel 59 prüfen auf den Steuerbefehl SA hin, vor dessen und somit vor der Ansteuerung der Antriebe 17, 18, die Zustandssignale 95-97. Nur wenn beispielsweise die Heckklappe 89 offen ist, das Zustandssignal 96 signalisiert, dass die Zündung des Kraftfahrzeugs 80 aus ist oder das Kraftfahrzeug 80 jedenfalls nicht betriebsbereit ist und zudem das Zustandssignal 97 signalisiert, dass das Kraftfahrzeug 80 steht oder nicht mit mehr als mit einer vorbestimmten Maximalgeschwindigkeit fährt, geben die Steuermittel 59 die Ansteuerung des Antriebs 17 und/oder 18 frei. Die Steuermittel 59 führen also eine logische Verknüpfung beispielsweise der Zustandssignale 95 und 96, vorzugsweise mehrerer oder aller Zustandssignale 95-97, durch, um die Ansteuerung des Antriebs 17 und/oder 18 freizugeben. Ansonsten blockieren die Steuermittel 59 eine derartige Ansteuerung.

Es versteht sich, dass die vorgenannten Zustandssignale exemplarisch sind, d. h. dass eine Überprüfung beispielsweise nur des Zustandssignals 96 ausreichen kann oder dass weitere Zustände von den Steuermitteln 59 geprüft werden, beispielsweise die Geschwindigkeitsinformation 99 der Busnachricht 98 ausgewertet wird, um festzustellen, dass das Kraftfahrzeug 80 steht.

Wenn das Kraftfahrzeug 80 nicht betriebsbereit ist, also beispielsweise seine Zündung ausgeschaltet ist, hat das Zustandssignal 96 typischerweise den Wert logisch Null und/oder beträgt seine Spannung etwa null Volt. Wenn jedoch die Zündung eingeschaltet wird und/oder das Kraftfahrzeug 80 grundsätzlich fahrbereit ist, hat das Zustandssignal 96 einen vorbestimmten Mindestwert oder Signalpegel, beispielsweise logisch 1 oder einen entsprechenden analogen Wert, insbesondere Spannungswert.

Das Zustandssignal 96 hat aber auch dann den Wert logisch Null oder keinen Signalpegel oder nur einen geringen Signalpegel, wenn eine das Zustandssignal 96 bereitstellende und am Steuergerät 30 angeschlossene elektrische Leitung unterbrochen ist. Dann geht das Steuergerät 30 sozusagen irrtümlich davon aus, dass das Kraftfahrzeug 80 nicht fahrbereit ist. Die Steuermittel 59 könnten in dieser Situation eine Ansteuerung der Antriebe 17 und/oder 18 freigeben, auch wenn das Kraftfahrzeug 80 tatsächlich betriebsbereit ist und fährt.

Hier schafft eine Validierungseinrichtung 61 Abhilfe. Die Validierungseinrichtung 61 umfasst beispielsweise Programmcode des Funktionssoftwaremoduls 38 und/oder eine Teilfunktion des Funktionssoftwaremoduls 38, z.B. eine Validierungsfunktion 62.

Des Weiteren umfasst die Validierungseinrichtung 61 beispielsweise die Zustandssignal-Eingänge 52-54 sowie 60. Die Zustandssignal-Eingänge 52-54 sowie 60 sind beispielsweise am Prozessor 33 und/oder einem Analog-Digitalwandler (nicht dargestellt) des Steuergeräts 30 vorgesehen oder dergleichen. Der Prozessor 33 kann auch einen Analog-Digitalwandler aufweisen, beispielsweise am Zustandssignal-Eingang 52. Der Zustandssignal-Eingang 53 hingegen ist ein digitaler Eingang des Prozessors 33.

Das Zustandssignal 96 ist redundant auf beide Zustandssignal-Eingänge 52, 53 aufgeschaltet. Nur wenn an beiden Zustandssignal-Eingängen 52, 53 jeweils derselbe Eingangswert oder miteinander korrelierende Eingangswerte für das Zustandssignal 96 feststellbar sind, wird das Zustandssignal 96 grundsätzlich als gültig erkannt.

Allerdings ist für ein sozusagen gültiges oder valides Zustandssignal 96 notwendig, dass sich das Zustandssignal 96 innerhalb einer vorbestimmten Zeitspanne und/oder nach einer oder mehreren Betätigungen der Antriebe 17 und/oder 18 ändert. Typischerweise wird nämlich das Kraftfahrzeug 80 mindestens von Zeit zu Zeit bewegt, jedenfalls typischerweise häufiger, als die Anhängekupplung 10 zwischen der Gebrauchsstellung G und der Nichtgebrauchstellung N verstellt wird.

Beispielsweise führt der Prozessor 33 Programmcode der Validierungsfunktion 62 der Validierungseinrichtung 61 aus.

Die Validierungsfunktion 62 liest in einem Schritt 601 beispielsweise die jeweiligen Signalwerte an den Zustandssignal-Eingängen 52, 53 ein und überprüft, ob diese miteinander korrelieren. Es ist zum Beispiel möglich, dass die Validierungsfunktion 62 vom Prozessor 33 oder einem Betriebssystem 64 des Steuergeräts 30 immer dann, wenn sich das Zustandssignal 96 ändert, und/oder nach einer vorbestimmten Zeit sozusagen aufgeweckt wird und den Schritt 601 durchführt.

In einem Entscheidungsschritt 602 überprüft die Validierungsfunktion 62, ob zwischen einem vorherigen Einlesen der Zustandssignal-Eingänge 52, 53 und dem aktuellen Einlesen derselben die Signalwerte des Zustandssignals 96 verändert sind, also beispielsweise von logisch Null auf logisch 1 gewechselt haben. Wenn dies der Fall ist, durchläuft die Validierungsfunktion 62 einen Übergang 603 bis zu einem Schritt 604, in dem ein Validierungswert VAL inkrementiert wird oder auf einen festen Wert gesetzt wird, beispielsweise einen Wert größer als 1.

Ausgehend vom Schritt 604 geht die Validierungsfunktion 62 in einem Übergang 605 wieder zum Schritt 601 über, liest also erneut die Zustandssignal-Eingänge 52, 53 ein oder wartet darauf, erneut vom Prozessor 33 oder dem Betriebssystem 64 des Steuergeräts 30 aufgeweckt zu werden.

Wenn jedoch im Entscheidungsschritt 602 festgestellt wird, dass die Signalwerte an den Zustandssignal-Eingängen 52, 53 unverändert sind, findet ein Übergang 606 zum Schritt 601 ohne Veränderung des Validierungswerts VAL statt.

Die Steuermittel 59 hingegen dekrementieren den Validierungswert VAL jedes Mal, wenn sie die Antriebe 17, 18 zum Verstellen des Kupplungsarms 14 aus der Gebrauchsstellung G in die Nichtgebrauchstellung N oder umgekehrt ansteuern.

Weiterhin prüfen die Steuermittel 59 nicht nur wie bereits oben erwähnt die Zustandssignale 95-97 vor einer jeweiligen Ansteuerung der Antriebe 17, 18, sondern überprüfen auch, ob der Validierungswert VAL größer als 0 ist. Dann ist nämlich sichergestellt, dass das Zustandssignal 96 ein valides Zustandssignal ist, d. h. dass nicht beispielsweise ein Kabelbruch vorliegt. Wenn jedoch der Validierungswert VAL gleich 0 ist, wenn die Antriebe 17, 18 betätigt werden sollen, gibt das Steuergerät 30 beispielsweise an dem Ausgabemittel 44, insbesondere dem Leuchtmittel 44A, eine Warnmeldung aus. Daran erkennt der Bediener, dass er mindestens einmal das Kraftfahrzeug 80 betriebsbereit schalten muss, also eine Veränderung des Zustandssignals 96 bewirken muss, insbesondere durch Einschalten und/oder Ausschalten einer Zündung des Kraftfahrzeugs 80, damit die Anhängekupplung 10 wieder ansteuerbar ist.

Zugleich stellt die obige Routine eine Art Spielschutz oder einen Schutz gegen Fehlbedienung oder unbeabsichtigte Mehrfachbedienung dar. Wenn nämlich der Bediener nach dem Einschalten und anschließenden Ausschalten der Betriebsbereitschaft des Kraftfahrzeugs 80 das Steuergerät 30 mehrfach zum Verstellen des Kupplungsarms 14 ansteuert, also die Antriebe 17, 18 aktiviert, wird dabei jeweils der Validierungswert VAL verringert, d. h. die Anzahl von Möglichkeiten, die Antriebe 17, 18 zu aktivieren, nimmt mit jeder Bedienhandlung oder jeder Gabe des Schaltbefehls SA ab. Wenn also beispielsweise der Validierungswert VAL durch die Validierungsfunktion 62 bei einem Zustandswechsel des Zustandssignals 96 auf einen Wert 10 gesetzt wird, kann der Bediener zehnmal das Steuergerät 30 zum Verstellen des Kupplungsarms 14 betätigen. Danach muss er beispielsweise durch Betätigen einer Zündung des Kraftfahrzeugs 80 mindestens einmal die Betriebsbereitschaft des Kraftfahrzeugs 80 einschalten und ausschalten. Somit wird einer Fehlbedienung vorgebeugt, d. h. dass beispielsweise die Antriebe 17, 18 nicht durch eine zu häufige Schaltfolge überhitzt werden können.

In gleicher Weise kann auch beispielsweise das Zustandssignal 97 für die Fahrgeschwindigkeit des Kraftfahrzeugs 80 einer Validierung unterzogen werden. Beispielsweise ist das Zustandssignal 96 ein analoges Signal, dessen Spannungshöhe und/oder Spannungsfrequenz oder Schaltfrequenz eine Fahrgeschwindigkeit des Kraftfahrzeugs 80 repräsentiert. Das Zustandssignal 97 muss sich beispielsweise innerhalb einer vorbestimmten Zeit dann, wenn das Zustandssignal 96 eine Betriebsbereitschaft des Kraftfahrzeugs signalisiert, ändern, damit es von der Validierungseinrichtung 61 als valides Signal erkannt wird.

Es ist weiterhin möglich, dass die Validierungseinrichtung 61 eine Plausibilitätsprüfung durchführt.

Vorteilhaft ist es möglich, dass das Steuergerät 30 beispielsweise einen Bewegungssensor 63 aufweist. Wenn der Bewegungssensor 63 eine Bewegung des Kraftfahrzeugs 80 meldet, zugleich aber das Zustandssignal 97 den Stillstand des Kraftfahrzeugs 80 signalisiert, ist das Zustandssignal 97 nicht valide oder gültig.

Beispielsweise kann die Validierungseinrichtung 61 auch anhand der Geschwindigkeitsinformation 99 erkennen, ob das Zustandssignal 96 valide ist. Wenn nämlich das Zustandssignal 96 beispielsweise logisch Null ist, also signalisiert, dass das Kraftfahrzeug 80 nicht betriebsbereit oder ausgeschaltet ist, gleichzeitig aber die Geschwindigkeitsinformation 99 eine Fahrgeschwindigkeit deutlich größer 0 anzeigt, ist das Zustandssignal 96 nicht gültig oder valide. Eine derartige Plausibilitätsüberprüfung kann beispielsweise zyklisch durch die Validierungseinrichtung 61 durchgeführt werden.

Die Erfindung betrifft also ein Steuergerät für eine Anhängekupplung für ein Kraftfahrzeug, wobei die Anhängekupplung einen an dem Kraftfahrzeug montierbaren Halter aufweist, an dem ein Kupplungsarm zwischen einer Gebrauchsstellung und einer Nichtgebrauchsstellung verstellbar ist, wobei der Kupplungsarm einen Kuppelkörper zum Anhängen des Anhängers oder Ankoppeln des Lastenträgers aufweist, wobei das Steuergerät einen Steuereingang für ein Steuersignal und Steuermittel aufweist, die in Abhängigkeit von dem Steuersignal einen Antrieb zum Verstellen des Kupplungsarms aus der Gebrauchsstellung ansteuern, wobei der Antrieb einen Kupplungsarm-Antrieb zum Verstellen des Kupplungsarms zwischen der Gebrauchsstellung und der Nichtgebrauchsstellung und/oder einen Fixier-Antrieb einer Fixiereinrichtung der Anhängekupplung zum Fixieren des Kupplungsarms in der Gebrauchsstellung umfasst, und wobei das Steuergerät einen Zustandssignal-Eingang für mindestens ein Zustandssignal des Kraftfahrzeugs aufweist, wobei das Zustandssignal mindestens einen für die Ansteuerung des Antriebs der Anhängekupplung relevanten Zustand des Kraftfahrzeugs repräsentiert und die Steuermittel in Abhängigkeit von einem jeweiligen Wert des mindestens einen Zustandssignals die Ansteuerung des Antriebs freigeben oder blockieren. Das Steuergerät weist eine Validierungseinrichtung zur Validierung des mindestens einen Zustandssignals anhand mindestens einer Validierungsbedingung auf. Die Steuermittel blockieren die Ansteuerung des Antriebs unabhängig vom jeweiligen Wert des mindestens einen Zustandssignals, wenn die Validierungseinrichtung das mindestens eine Zustandssignal als ein nicht valides Zustandssignal qualifiziert.

## Patentansprüche

1. Steuergerät (30) für eine Anhängekupplung (10) für ein Kraftfahrzeug (80), wobei die Anhängekupplung (10) einen an dem Kraftfahrzeug (80) fahrzeugfest montierten oder montierbaren Halter (12) aufweist, an dem ein Kupplungsarm (14) zwischen einer zum Anhängen eines Anhängers (180) oder Ankoppeln eines Lastenträgers an das Kraftfahrzeug (80) vorgesehenen Gebrauchsstellung (G) und einer für den Nichtgebrauch des Kupplungsarms (14) vorgesehenen Nichtgebrauchsstellung (N) verstellbar, insbesondere mittels einer Lagereinrichtung (13) beweglich gelagert, ist, wobei der Kupplungsarm (14) an einem von der Lagereinrichtung (13) entfernten Endbereich einen Kuppelkörper (15A), insbesondere eine Kupplungskugel (15), zum Anhängen des Anhängers (180) oder Ankoppeln des Lastenträgers aufweist, wobei das Steuergerät (30) einen Steuereingang (57) für ein Steuersignal (SA) und Steuermittel (59) aufweist, die in Abhängigkeit von dem Steuersignal (SA) einen Antrieb (17, 18) zum Verstellen des Kupplungsarms (14) aus der Gebrauchsstellung (G) ansteuern, wobei der Antrieb einen Kupplungsarm-Antrieb (18) zum Verstellen des Kupplungsarms (14) zwischen der Gebrauchsstellung (G) und der Nichtgebrauchsstellung (N) und/oder einen Fixier-Antrieb (17) einer Fixiereinrichtung (16) der Anhängekupplung (10) zum Fixieren des Kupplungsarms (14) in der Gebrauchsstellung (G) umfasst, wobei das Steuergerät einen Zustandssignal-Eingang (52-54) für mindestens ein Zustandssignal (96, 97) des Kraftfahrzeugs (80) und/oder der Anhängekupplung (10) aufweist, wobei das Zustandssignal (96, 97) mindestens einen für die Ansteuerung des Antriebs (17, 18) der Anhängekupplung (10) relevanten Zustand des Kraftfahrzeugs (80) und/oder der Anhängekupplung (10) repräsentiert und die Steuermittel (59) in Abhängigkeit von einem jeweiligen Wert des mindestens einen Zustandssignals (96, 97) die Ansteuerung des Antriebs (17, 18) freigeben oder blockieren, und wobei das Steuergerät (30) eine Validierungseinrichtung (61) zur Validierung des mindestens einen Zustandssignals (96, 97) anhand mindestens einer Validierungsbedingung aufweist und **dadurch gekennzeichnet ist, dass** die Steuermittel (59) die Ansteuerung des Antriebs (17, 18) unabhängig vom jeweiligen Wert des mindestens einen Zustandssignals (96, 97) blockieren, wenn die Validierungseinrichtung (61) das mindestens eine Zustandssignal (96, 97) als ein nicht valides Zustandssignal (96, 97) qualifiziert, und dass die Validierungseinrichtung (61) zur Validierung des Zustandssignals (96, 97) eine Veränderung des mindestens einen Zustandssignals (96, 97) überprüft.

2. Steuergerät nach Anspruch 1, **dadurch gekennzeichnet, dass** die Validierungseinrichtung (61) das Zustandssignal (96, 97) zu seiner Validierung mit mindestens einem Grenzwert vergleicht und/oder dass die mindestens eine Validierungsbedingung umfasst oder dadurch gebildet ist, dass nach mindestens einer Ansteuerung, insbesondere nach einer vorbestimmten oder einstellbaren Anzahl von Ansteuerungen, des mindestens einen Antriebs (17, 18) zum Verstellen des Kupplungsarms (14) aus der Gebrauchsstellung (G) mindestens eine Validierung, insbesondere mindestens eine Veränderung, des mindestens einen Zustandssignals (96, 97) erfolgen muss, damit das Zustandssignal (96, 97) als valides Zustandssignal (96, 97) qualifiziert ist.

3. Steuergerät nach Anspruch 1 oder 2, **dadurch gekennzeichnet, dass** die mindestens eine Veränderung des Zustandssignals (96, 97) eine Veränderung zwischen logisch "Null" und logisch "Eins" umfasst oder dadurch gebildet ist.

4. Steuergerät nach einem der vorhergehenden Ansprüche, **dadurch gekennzeichnet, dass** die mindestens eine Validierungsbedingung eine Zeitspanne beinhaltet (10), innerhalb derer das mindestens eine Zustandssignal (96, 97) mindestens eine Änderung aufweisen muss, und/oder dass die mindestens eine Validierungsbedingung umfasst oder dadurch gebildet ist, dass das mindestens eine Zustandssignal (96, 97) einen Grenzwert überschreitet und anschließend unterschreitet oder unterschreitet und anschließend überschreitet.

5. Steuergerät nach einem der vorhergehenden Ansprüche, **dadurch gekennzeichnet, dass** das mindestens eine Zustandssignal (96, 97) eines oder mehrere der folgenden Signale umfasst oder dadurch gebildet ist:
- ein Betriebsbereitschaftssignal (96), insbesondere ein Zündung-an-Signal und/oder ein Klemme-15-Signal, wobei das Betriebsbereitschaftssignal eine Betriebsbereitschaft des Kraftfahrzeugs (80) für einen Fahrbetrieb signalisiert, und/oder
- ein Geschwindigkeitssignal (97) des Kraftfahrzeugs (80), welches eine Fahrgeschwindigkeit des Kraftfahrzeugs (80) signalisiert, und/oder
- ein Öffnungssignal (95), das eine Offenstellung oder Schließstellung eines Karosserie-Verschlusselements des Kraftfahrzeugs (80), insbesondere einer Türe und/oder Heckklappe (89) des Kraftfahrzeugs (80), signalisiert, und/oder
- ein Signal (BS) eines Sensors der Anhängekupplung (10).

6. Steuergerät nach einem der vorhergehenden Ansprüche, **dadurch gekennzeichnet, dass** die mindestens eine Validierungsbedingung umfasst oder dadurch gebildet ist, dass das mindestens eine Zustandssignal (96, 97) im Zusammenhang mit mindestens einem weiteren Zustand des Kraftfahrzeugs (80) plausibel ist, wobei vorteilhaft vorgesehen ist, dass der weitere Zustand des Kraftfahrzeugs (80) durch das Steuergerät (30) anhand eines Sensorsignals und/oder eines weiteren Zustandssignals (96, 97) erfassbar oder erfasst ist.

7. Steuergerät nach einem der vorhergehenden Ansprüche, **dadurch gekennzeichnet, dass** das mindestens eine Zustandssignal (96, 97) ein analoges Signal, insbesondere ein Spannungssignal, umfasst oder dadurch gebildet ist.

8. Steuergerät nach einem der vorhergehenden Ansprüche, **dadurch gekennzeichnet, dass** die Validierungseinrichtung (61) einen ersten Zustandssignal-Eingang (52) und einen zweiten, von dem ersten Zustandssignal-Eingang (52) verschiedenen Zustandssignal-Eingang (53) für das mindestens eine Zustandssignal (96, 97) aufweist und den ersten Zustandssignal-Eingang (52) und den mindestens einen zweiten Zustandssignal-Eingang (53) zur Validierung des Zustandssignals (96, 97) auswertet und nur dann das Zustandssignal (96, 97) als valide interpretiert, wenn an dem ersten Zustandssignal-Eingang (52) und dem mindestens einen zweiten Zustandssignal-Eingang (53) erfasste, gegebenenfalls gewichtete, Werte identisch sind oder sich nur um eine vorbestimmte Toleranz voneinander unterscheiden, wobei vorteilhaft vorgesehen ist, dass der erste Zustandssignal-Eingang (52) zur Erfassung eines analogen Signals und der zweite Zustandssignal-Eingang (53) zur Erfassung eines digitalen Signals ausgestaltet und/oder vorgesehen ist.

9. Steuergerät nach einem der vorhergehenden Ansprüche, **dadurch gekennzeichnet, dass** es derart ausgestaltet ist, dass bei einer einzigen Ansteuerung oder einer vorbestimmten Anzahl von Ansteuerungen des Antriebs (17, 18) zum Verstellen des Kupplungsarms (14) aus der Gebrauchsstellung (G) und/oder der Nichtgebrauchsstellung (N) ein weiteres Ansteuern des Antriebs (17, 18) nur nach vorheriger erfolgreicher Validierung des Zustandssignals (96, 97) möglich ist, und/oder dass es einen dem Zustandssignal (96, 97) zugeordneten Validierungswert (VAL) aufweist, der bei jeder Überprüfung des Zustandssignals (96, 97), bei der das Zustandssignal (96, 97) als valide erkannt wird, inkrementiert oder auf einen Anfangswert zurückgesetzt wird und bei einer Ansteuerung des mindestens einen Antriebs (17, 18) zum Verstellen des Kupplungsarms (14) aus der Gebrauchsstellung (G) und/oder der Nichtgebrauchsstellung (N) dekrementiert oder zurückgesetzt wird, und dass eine Ansteuerung des mindestens einen Antriebs (17, 18) nur dann möglich ist, wenn der Validierungswert (VAL) größer als ein vorbestimmter Schwellwert ist, insbesondere größer null ist.

10. Steuergerät nach einem der vorhergehenden Ansprüche, **dadurch gekennzeichnet, dass** die Validierungseinrichtung (61) eine Fehlermeldung, insbesondere eine optische und/oder akustische Fehlermeldung ausgibt, wenn das mindestens eine Zustandssignal (96, 97) als nicht valide erkannt ist, und/oder dass es einen Zustandssignal-Eingang (52) für das mindestens eine Zustandssignal, das ein erstes Zustandssignal (96) bildet, sowie mindestens einen zweiten Zustandssignal-Eingang (54) für ein zweites Zustandssignal (97) aufweist, wobei die Steuermittel (59) zur logischen Verknüpfung und/oder zur Auswertung des ersten Zustandssignals (96) mit dem zweiten Zustandssignal (97) zur Ansteuerung des Antriebs (17, 18) ausgestaltet sind, wobei die Steuermittel (59) die Ansteuerung des Antriebs (17, 18) blockieren, wenn die Validierungseinrichtung (61) das mindestens eine erste Zustandssignal (96) und/oder das mindestens eine zweite Zustandssignal (97) als ein nicht valides Zustandssignal qualifiziert.

11. Steuergerät nach einem der vorhergehenden Ansprüche, **dadurch gekennzeichnet, dass** die Steuermittel (59) zu einer logischen Verknüpfung und/oder Auswertung mindestens zweier Zustandssignale (96, 97) zur Ansteuerung des Antriebs (17, 18) ausgestaltet sind, von denen mindestens eines durch die Validierungseinrichtung (61) validiert ist, wobei die Steuermittel (59) die Ansteuerung des Antriebs (17, 18) blockieren, wenn mindestens ein Zustandssignal (96 oder 97) der mindestens zwei Zustandssignale (96, 97) von der Validierungseinrichtung (96) als ein nicht valides Zustandssignal qualifiziert ist.

12. Steuergerät nach einem der vorhergehenden Ansprüche, **dadurch gekennzeichnet, dass** die Validierungseinrichtung (61) die Zustandssignale (96, 97) nicht logisch miteinander verknüpft oder ausschließlich zum Zwecke der Validierung mindestens eines der Zustandssignale (96, 97) logisch miteinander verknüpft.

13. Anhängekupplung mit einem Steuergerät (30) nach einem der vorhergehenden Ansprüche.

14. Verfahren zum Betreiben eines Steuergeräts (30) für eine Anhängekupplung (10) für ein Kraftfahrzeug (80), wobei die Anhängekupplung (10) einen an dem Kraftfahrzeug (80) fahrzeugfest montierten oder montierbaren Halter (12) aufweist, an dem ein Kupplungsarm (14) zwischen einer zum Anhängen eines Anhängers (180) oder Ankoppeln eines Lastenträgers an das Kraftfahrzeug (80) vorgesehenen Gebrauchsstellung (G) und einer für den Nichtgebrauch des Kupplungsarms (14) vorgesehenen Nichtgebrauchsstellung (N) verstellbar, insbesondere mittels einer Lagereinrichtung (13) beweglich gelagert, ist, wobei der Kupplungsarm (14) an einem von der Lagereinrichtung (13) entfernten Endbereich einen Kuppelkörper (15A), insbesondere eine Kupplungskugel (15), zum Anhängen des Anhängers (180) oder Ankoppeln des Lastenträgers aufweist, wobei das Steuergerät (30) einen Steuereingang (57) für ein Steuersignal (SA) und Steuermittel (59) aufweist, wobei die Steuermittel (59) in Abhängigkeit von dem Steuersignal (SA) einen Antrieb (17, 18) zum Verstellen des Kupplungsarms (14) aus der Gebrauchsstellung (G) ansteuern, wobei der Antrieb (17, 18) einen Kupplungsarm-Antrieb (18) zum Verstellen des Kupplungsarms (14) zwischen der Gebrauchsstellung (G) und der Nichtgebrauchsstellung und/oder einen Fixier-Antrieb (17) einer Fixiereinrichtung (16) der Anhängekupplung (10) zum Fixieren des Kupplungsarms (14) in der Gebrauchsstellung (G) umfasst, und wobei das Steuergerät einen Zustandssignal-Eingang (52-54) für mindestens ein Zustandssignal (96, 97) des Kraftfahrzeugs (80) und/oder der Anhängekupplung (10) aufweist, wobei das Zustandssignal (96, 97) mindestens einen für die Ansteuerung des Antriebs der Anhängekupplung (10) relevanten Zustand des Kraftfahrzeugs (80) und/oder der Anhängekupplung (10) repräsentiert, und wobei die Steuermittel (59) in Abhängigkeit von einem jeweiligen Wert des mindestens einen Zustandssignals (96, 97) die Ansteuerung des Antriebs (17, 18) freigeben oder blockieren, mit den Schritten:
- Validieren des mindestens einen Zustandssignals (96, 97) anhand mindestens einer Validierungsbedingung durch eine Validierungseinrichtung (61) und
- Blockieren der Ansteuerung des Antriebs (17, 18) unabhängig vom jeweiligen Wert des mindestens einen Zustandssignals (96, 97) durch die Steuermittel, wenn die Validierungseinrichtung (61) das mindestens eine Zustandssignal (96, 97) als ein nicht valides Zustandssignal (96, 97) qualifiziert, **dadurch gekennzeichnet, dass** die Validierungseinrichtung (61) zur Validierung des Zustandssignals (96, 97) eine Veränderung des mindestens einen Zustandssignals (96, 97) überprüft.

15. Validierungseinrichtung für ein zum Ansteuern einer Anhängekupplung (10) vorgesehenes und/oder ausgestaltetes Steuergerät (30) in Gestalt eines Softwaremoduls mit Programmcode, der durch einen Prozessor (33) des Steuergeräts (30) ausführbar ist und bei dessen Ausführung das Steuergerät (30) die Schritte des Verfahrens gemäß Anspruch 14 und/oder die Funktionen der Validierungseinrichtung des Verfahrens nach Anspruch 14 durchführt.

## Claims

1. Control unit (30) for a trailer coupling (10) for a motor vehicle (80), the trailer coupling (10) having a holder (12) which is mounted or can be mounted on the motor vehicle (80) so as to be fixed to the vehicle and on which a coupling arm (14) is adjustable between an in-use position (G), intended for attaching a trailer (180) or coupling a load carrier onto the motor vehicle (80), and a not-in-use position (N), intended for when the coupling arm (14) is not in use, in particular is movably mounted by means of a bearing device (13), the coupling arm (14) having at an end region remote from the bearing device (13) a coupling body (15A), in particular a coupling ball (15), for attaching the trailer (180) or coupling the load carrier, the control unit (30) having a control input (57) for a control signal (SA) and control means (59) which, depending on the control signal (SA), actuate a drive (17, 18) for adjusting the coupling arm (14) out of the in-use position (G), the drive comprising a coupling arm drive (18) for adjusting the coupling arm (14) between the in-use position (G) and the not-in-use position (N) and/or a fixing drive (17) of a fixing device (16) of the trailer coupling (10) for fixing the coupling arm (14) in the in-use position (G), the control unit having a status signal input (52-54) for at least one status signal (96, 97) of the motor vehicle (80) and/or of the trailer coupling (10), the status signal (96, 97) representing at least one status of the motor vehicle (80) and/or of the trailer coupling (10) relevant for the actuation of the drive (17, 18) of the trailer coupling (10), and the control means (59) enabling or blocking the actuation of the drive (17, 18) depending on a respective value of the at least one status signal (96, 97), and the control unit (30) having a validation device (61) for validating the at least one status signal (96, 97) on the basis of at least one validation condition and is **characterized in that** the control means (59) block the actuation of the drive (17, 18) independently of the respective value of the at least one status signal (96, 97) if the validation device (61) classifies the at least one status signal (96, 97) as an invalid status signal (96, 97), and **in that**, for validating the status signal (96, 97), the validation device (61) checks a change of the at least one status signal (96, 97).

2. Control unit according to Claim 1, **characterized in that**, for its validation, the validation device (61) compares the status signal (96, 97) with at least one limit value and/or **in that** the at least one validation condition comprises or constitutes that, after at least one actuation, in particular after a number of actuations that is predetermined or can be set, of the at least one drive (17, 18) for adjusting the coupling arm (14) out of the not-in-use position (G), at least one validation, in particular at least one change, of the at least one status signal (96, 97) must take place in order that the status signal (96, 97) is classified as a valid status signal (96, 97).

3. Control unit according to Claim 1 or 2, **characterized in that** the at least one change of the status signal (96, 97) comprises or constitutes a change between logical "zero" and logical "one".

4. Control unit according to one of the preceding claims, **characterized in that** the at least one validation condition includes a time period (10) within which the at least one status signal (96, 97) must comprise at least one change, and/or **in that** the at least one validation condition comprises or constitutes that the at least one status signal (96, 97) goes above and then below or goes below and then above a limit value.

5. Control unit according to one of the preceding claims, **characterized in that** the at least one status signal (96, 97) comprises or constitutes one or more of the following signals:
- an operational readiness signal (96), in particular an ignition-on signal and/or a terminal-15 signal, the operational readiness signal signalling an operational readiness of the motor vehicle (80) for driving operation, and/or
- a speed signal (97) of the motor vehicle (80), which signals a driving speed of the motor vehicle (80), and/or
- an opening signal (95), which signals an open position or closed position of a body closure element of the motor vehicle (80), in particular a door and/or tailgate (89) of the motor vehicle (80), and/or
- a signal (BS) of a sensor of the trailer coupling (10).

6. Control unit according to one of the preceding claims, **characterized in that** the at least one validation condition comprises or constitutes that the at least one status signal (96, 97) is plausible in connection with at least one further status of the motor vehicle (80), it being advantageously provided that the further status of the motor vehicle (80) can be sensed or has been sensed by the control unit (30) on the basis of a sensor signal and/or a further status signal (96, 97).

7. Control unit according to one of the preceding claims, **characterized in that** the at least one status signal (96, 97) comprises or is constituted by an analogue signal, in particular a voltage signal.

8. Control unit according to one of the preceding claims, **characterized in that** the validation device (61) has a first status signal input (52) and a second status signal input (53), different from the first status signal input (52), for the at least one status signal (96, 97) and evaluates the first status signal input (52) and the at least one second status signal input (53) for validating the status signal (96, 97) and only interprets the status signal (96, 97) as valid if values, possibly weighted values, sensed at the first status signal input (52) and the at least one second status signal input (53) are identical or only differ from one another by a predetermined tolerance, it being advantageously provided that the first status signal input (52) is designed and/or intended for sensing an analogue signal and the second status signal input (53) is designed and/or intended for sensing a digital signal.

9. Control unit according to one of the preceding claims, **characterized in that** it is designed in such a way that, with a single actuation or a predetermined number of actuations of the drive (17, 18) for adjusting the coupling arm (14) out of the in-use position (G) and/or the not-in-use position (N), further actuating of the drive (17, 18) is only possible after prior successful validation of the status signal (96, 97), and/or **in that** it has a validation value (VAL), assigned to the status signal (96, 97), which is incremented or reset to an initial value each time there is a check of the status signal (96, 97) in which the status signal (96, 97) is detected as valid and is decremented or reset when there is an actuation of the at least one drive (17, 18) for adjusting the coupling arm (14) out of the in-use position (G) and/or the not-in-use position (N), and **in that** an actuation of the at least one drive (17, 18) is only possible whenever the validation value (VAL) is greater than a predetermined threshold value, in particular greater than zero.

10. Control unit according to one of the preceding claims, **characterized in that** the validation device (61) issues an error message, in particular an optical and/or acoustic error message, if the at least one status signal (96, 97) is detected as invalid, and/or **in that** it has a status signal input (52) for the at least one status signal, which forms a first status signal (96), and also at least one second status signal input (54) for a second status signal (97), the control means (59) being designed for the logical interlinkage and/or evaluation of the first status signal (96) with the second status signal (97) for the actuation of the drive (17, 18), the control means (59) blocking the actuation of the drive (17, 18) if the validation device (61) classifies the at least one first status signal (96) and/or the at least one second status signal (97) as an invalid status signal.

11. Control unit according to one of the preceding claims, **characterized in that** the control means (59) are designed for a logical interlinkage and/or evaluation of at least two status signals (96, 97) for the actuation of the drive (17, 18), of which at least one is validated by the validation device (61), the control means (59) blocking the actuation of the drive (17, 18) if at least one status signal (96 or 97) of the at least two status signals (96, 97) is classified by the validation device (96) as an invalid status signal.

12. Control unit according to one of the preceding claims, **characterized in that** the validation device (61) does not logically interlink the status signals (96, 97) to one another or logically interlinks them to one another exclusively for the purpose of validating at least one of the status signals (96, 97).

13. Trailer coupling with a control unit (30) according to one of the preceding claims.

14. Method for operating a control unit (30) for a trailer coupling (10) for a motor vehicle (80), the trailer coupling (10) having a holder (12) which is mounted or can be mounted on the motor vehicle (80) so as to be fixed to the vehicle and on which a coupling arm (14) is adjustable between an in-use position (G), intended for attaching a trailer (180) or coupling a load carrier onto the motor vehicle (80), and a not-in-use position (N), intended for when the coupling arm (14) is not in use, in particular is movably mounted by means of a bearing device (13), the coupling arm (14) having at an end region remote from the bearing device (13) a coupling body (15A), in particular a coupling ball (15), for attaching the trailer (180) or coupling the load carrier, the control unit (30) having a control input (57) for a control signal (SA) and control means (59), the control means (59), depending on the control signal (SA), actuating a drive (17, 18) for adjusting the coupling arm (14) out of the in-use position (G), the drive (17, 18) comprising a coupling arm drive (18) for adjusting the coupling arm (14) between the in-use position (G) and the not-in-use position and/or a fixing drive (17) of a fixing device (16) of the trailer coupling (10) for fixing the coupling arm (14) in the in-use position (G), and the control unit having a status signal input (52-54) for at least one status signal (96, 97) of the motor vehicle (80) and/or of the trailer coupling (10), the status signal (96, 97) representing at least one status of the motor vehicle (80) and/or of the trailer coupling (10) relevant for the actuation of the drive of the trailer coupling (10), and the control means (59) enabling or blocking the actuation of the drive (17, 18) depending on a respective value of the at least one status signal (96, 97), with the following steps:
- validating the at least one status signal (96, 97) on the basis of at least one validation condition by a validation device (61) and
- blocking the actuation of the drive (17, 18) independently of the respective value of the at least one status signal (96, 97) by the control means if the validation device (61) classifies the at least one status signal (96, 97) as an invalid status signal (96, 97), **characterized in that**, for validating the status signal (96, 97), the validation device (61) checks a change of the at least one status signal (96, 97).

15. Validation device for a control unit (30) intended and/or designed for actuating a trailer coupling (10), in the form of a software module with program code which can be executed by a processor (33) of the control unit (30) and in the execution of which the control unit (30) carries out the steps of the method according to Claim 14 and/or the functions of the validation device of the method according to Claim 14.

## Revendications

1. Unité de commande (30) destinée à un accouplement de remorque (10) pour un véhicule automobile (80), l'accouplement de remorque (10) comportant un support (12) qui est monté ou peut être monté de manière fixe sur le véhicule automobile (80), sur lequel un bras d'accouplement (14) est monté mobile, en particulier au moyen d'un dispositif de palier (13), entre une position d'utilisation (G) prévue pour l'attelage d'une remorque (180) ou l'accouplement d'un support de charge au véhicule automobile (80) et une position de non-utilisation (N) prévue pour la non-utilisation du bras d'accouplement (14), le bras d'accouplement (14) comportant, au niveau d'une zone d'extrémité distante du dispositif de palier (13), un corps d'accouplement (15A), en particulier une boule d'accouplement (15), pour l'attelage de la remorque (180) ou l'accouplement du support de charge, l'unité de commande (30) comportant une entrée de commande (57) pour un signal de commande (SA) et des moyens de commande (59) qui actionnent, en fonction du signal de commande (SA), un entraînement (17, 18) pour le déplacement du bras d'accouplement (14) hors de la position d'utilisation (G), l'entraînement comprenant un entraînement de bras d'accouplement (18) pour le déplacement du bras d'accouplement (14) entre la position d'utilisation (G) et la position de non-utilisation (N) et/ou un entraînement de fixation (17) d'un dispositif de fixation (16) de l'accouplement de remorque (10) pour fixer le bras d'accouplement (14) dans la position d'utilisation (G), l'unité de commande comportant une entrée de signal d'état (52-54) pour au moins un signal d'état (96, 97) du véhicule automobile (80) et/ou de l'accouplement de remorque (10), le signal d'état (96, 97) représentant au moins un état du véhicule automobile (80) et/ou de l'accouplement de remorque (10) pertinent pour l'actionnement de l'entraînement (17, 18) de l'accouplement de remorque (10), et les moyens de commande (59) autorisant ou bloquant l'actionnement de l'entraînement (17, 18) en fonction d'une valeur respective dudit au moins un signal d'état (96, 97), et l'unité de commande (30) comportant un dispositif de validation (61) pour la validation dudit au moins un signal d'état (96, 97) à l'aide d'au moins une condition de validation, et **caractérisée en ce que** les moyens de commande (59) bloquent l'actionnement de l'entraînement (17, 18) indépendamment de la valeur respective dudit au moins un signal d'état (96, 97) si le dispositif de validation (61) qualifie ledit au moins un signal d'état (96, 97) comme signal d'état (96, 97) non valide, et **en ce que** le dispositif de validation (61) vérifie une modification dudit au moins un signal d'état (96, 97) pour la validation du signal d'état (96, 97).

2. Unité de commande selon la revendication 1, **caractérisée en ce que** le dispositif de validation (61) compare le signal d'état (96, 97), pour sa validation, à au moins une valeur limite et/ou **en ce que** ladite au moins une condition de validation comprend ou est constituée par le fait qu'après au moins un actionnement, en particulier après un nombre prédéterminé ou réglable d'actionnements, dudit au moins un entraînement (17, 18) pour déplacer le bras d'accouplement (14) hors de la position d'utilisation (G), au moins une validation, en particulier au moins une modification, dudit au moins un signal d'état (96, 97) doit avoir lieu pour que le signal d'état (96, 97) soit qualifié comme signal d'état valide (96, 97).

3. Unité de commande selon la revendication 1 ou 2, **caractérisée en ce que** ladite au moins une modification du signal d'état (96, 97) comprend ou est constituée par une modification entre un "zéro" logique et un "un" logique.

4. Unité de commande selon l'une quelconque des revendications précédentes, **caractérisée en ce que** ladite au moins une condition de validation inclut un intervalle de temps (10) à l'intérieur duquel ledit au moins un signal d'état (96, 97) doit présenter au moins une modification, et/ou **en ce que** ladite au moins une condition de validation comprend ou est constituée par le fait que ledit au moins un signal d'état (96, 97) dépasse une valeur limite et devient ensuite inférieur à celle-ci, ou devient inférieur à celle-ci et la dépasse ensuite.

5. Unité de commande selon l'une quelconque des revendications précédentes, **caractérisée en ce que** ledit au moins un signal d'état (96, 97) comprend un ou plusieurs des signaux suivants ou est constitué par ceux-ci :
- un signal de disponibilité opérationnelle (96), en particulier un signal de contact mis et/ou un signal de borne 15, le signal de disponibilité opérationnelle signalant une disponibilité opérationnelle du véhicule automobile (80) pour un mode de conduite, et/ou
- un signal de vitesse (97) du véhicule automobile (80), lequel signale une vitesse de circulation du véhicule automobile (80), et/ou
- un signal d'ouverture (95) qui signale une position ouverte ou une position fermée d'un élément de fermeture de carrosserie du véhicule automobile (80), en particulier d'une portière et/ou d'un hayon (89) du véhicule automobile (80), et/ou
- un signal (BS) d'un capteur de l'accouplement de remorque (10).

6. Unité de commande selon l'une quelconque des revendications précédentes, **caractérisée en ce que** ladite au moins une condition de validation comprend ou est constituée par le fait que ledit au moins un signal d'état (96, 97) est plausible en relation avec au moins un autre état du véhicule automobile (80), dans laquelle il est avantageusement prévu que l'autre état du véhicule automobile (80) puisse être détecté ou soit détecté par l'unité de commande (30) à l'aide d'un signal de capteur et/ou d'un autre signal d'état (96, 97).

7. Unité de commande selon l'une quelconque des revendications précédentes, **caractérisée en ce que** ledit au moins un signal d'état (96, 97) comprend ou est constitué par un signal analogique, en particulier un signal de tension.

8. Unité de commande selon l'une quelconque des revendications précédentes, **caractérisée en ce que** le dispositif de validation (61) comporte une première entrée de signal d'état (52) et une seconde entrée de signal d'état (53), différente de la première entrée de signal d'état (52), pour ledit au moins un signal d'état (96, 97), et évalue la première entrée de signal d'état (52) et ladite au moins une seconde entrée de signal d'état (53) pour la validation du signal d'état (96, 97) et n'interprète le signal d'état (96, 97) comme étant valide si des valeurs détectées, le cas échéant pondérées, au niveau de la première entrée de signal d'état (52) et de ladite au moins une deuxième entrée de signal d'état (53) sont identiques ou ne diffèrent l'une de l'autre que d'une tolérance prédéterminée, dans laquelle il est avantageusement prévu que la première entrée de signal d'état (52) est conçue et/ou prévue pour la détection d'un signal analogique et que la seconde entrée de signal d'état (53) est conçue et/ou prévue pour la détection d'un signal numérique.

9. Unité de commande selon l'une quelconque des revendications précédentes, **caractérisée en ce qu'**elle est conçue de telle manière que, lors d'un actionnement unique ou d'un nombre prédéterminé d'actionnements de l'entraînement (17, 18) pour déplacer le bras d'accouplement (14) hors de la position d'utilisation (G) et/ou de la position de non-utilisation (N), un actionnement supplémentaire de l'entraînement (17, 18) n'est possible qu'après une validation préalable réussie du signal d'état (96, 97), et/ou **en ce qu'**elle présente une valeur de validation (VAL) associée au signal d'état (96, 97), laquelle est incrémentée ou réinitialisée à une valeur initiale lors de chaque vérification du signal d'état (96, 97), lors de laquelle le signal d'état (96, 97) est reconnu comme valide, et est décrémentée ou réinitialisée lors d'un actionnement dudit au moins un entraînement (17, 18) pour déplacer le bras d'accouplement (14) hors de la position d'utilisation (G) et/ou de la position de non-utilisation (N), et **en ce qu'**un actionnement dudit au moins un entraînement (17, 18) n'est possible que si la valeur de validation (VAL) est supérieure à une valeur seuil prédéterminée, en particulier supérieure à zéro.

10. Unité de commande selon l'une quelconque des revendications précédentes, **caractérisée en ce que** le dispositif de validation (61) émet un message d'erreur, en particulier un message d'erreur optique et/ou acoustique, si ledit au moins un signal d'état (96, 97) est reconnu comme non valide, et/ou **en ce qu'**elle présente une entrée de signal d'état (52) pour ledit au moins un signal d'état, lequel constitue un premier signal d'état (96), ainsi qu'au moins une seconde entrée de signal d'état (54) pour un second signal d'état (97), les moyens de commande (59) étant conçus pour la combinaison logique et/ou pour l'évaluation du premier signal d'état (96) avec le second signal d'état (97) pour l'actionnement de l'entraînement (17, 18), les moyens de commande (59) bloquant l'actionnement de l'entraînement (17, 18) si le dispositif de validation (61) qualifie ledit au moins un premier signal d'état (96) et/ou ledit au moins un second signal d'état (97) comme signal d'état non valide.

11. Unité de commande selon l'une quelconque des revendications précédentes, **caractérisée en ce que** les moyens de commande (59) sont conçus pour une combinaison logique et/ou une évaluation d'au moins deux signaux d'état (96, 97) pour l'actionnement de l'entraînement (17, 18), dont l'un au moins est validé par le dispositif de validation (61), les moyens de commande (59) bloquant l'actionnement de l'entraînement (17, 18) si au moins un signal d'état (96 ou 97) parmi lesdits au moins deux signaux d'état (96, 97) est qualifié par le dispositif de validation (96) comme signal d'état non valide.

12. Unité de commande selon l'une quelconque des revendications précédentes, **caractérisée en ce que** le dispositif de validation (61) ne combine pas logiquement les signaux d'état (96, 97) entre eux ou ne les combine logiquement entre eux qu'exclusivement à des fins de validation d'au moins l'un des signaux d'état (96, 97).

13. Accouplement de remorque comportant une unité de commande (30) selon l'une quelconque des revendications précédentes.

14. Procédé de fonctionnement d'une unité de commande (30) destinée à un accouplement de remorque (10) pour véhicule automobile (80), l'accouplement de remorque (10) comportant un support (12) qui est monté ou peut être monté de manière fixe sur le véhicule automobile (80), sur lequel un bras d'accouplement (14) est monté mobile, en particulier au moyen d'un dispositif de palier (13), entre une position d'utilisation (G) prévue pour l'attelage d'une remorque (180) ou l'accouplement d'un support de charge au véhicule automobile (80) et une position de non-utilisation (N) prévue pour la non-utilisation du bras d'accouplement (14), le bras d'accouplement (14) comportant, au niveau d'une zone d'extrémité distante du dispositif de palier (13), un corps d'accouplement (15A), en particulier une boule d'accouplement (15), pour l'attelage de la remorque (180) ou l'accouplement du support de charge, l'unité de commande (30) comportant une entrée de commande (57) pour un signal de commande (SA) et des moyens de commande (59), les moyens de commande (59) actionnant, en fonction du signal de commande (SA), un entraînement (17, 18) pour le déplacement du bras d'accouplement (14) hors de la position d'utilisation (G), l'entraînement (17, 18) comprenant un entraînement de bras d'accouplement (18) pour le déplacement du bras d'accouplement (14) entre la position d'utilisation (G) et la position de non-utilisation et/ou un entraînement de fixation (17) d'un dispositif de fixation (16) de l'accouplement de remorque (10) pour fixer le bras d'accouplement (14) dans la position d'utilisation (G), et l'unité de commande comportant une entrée de signal d'état (52-54) pour au moins un signal d'état (96, 97) du véhicule automobile (80) et/ou de l'accouplement de remorque (10), le signal d'état (96, 97) représentant au moins un état du véhicule automobile (80) et/ou de l'accouplement de remorque (10) pertinent pour l'actionnement de l'entraînement de l'accouplement de remorque (10), et les moyens de commande (59) autorisant ou bloquant l'actionnement de l'entraînement (17, 18) en fonction d'une valeur respective dudit au moins un signal d'état (96, 97), comprenant les étapes suivantes :
- validation dudit au moins un signal d'état (96, 97) par un dispositif de validation (61) à l'aide d'au moins une condition de validation, et
- blocage de l'actionnement de l'entraînement (17, 18) par les moyens de commande indépendamment de la valeur respective dudit au moins un signal d'état (96, 97) si le dispositif de validation (61) qualifie ledit au moins un signal d'état (96, 97) comme signal d'état (96, 97) non valide, **caractérisé en ce que** le dispositif de validation (61) vérifie une modification dudit au moins un signal d'état (96, 97) pour la validation du signal d'état (96, 97).

15. Dispositif de validation pour une unité de commande (30) prévue et/ou conçue pour l'actionnement d'un accouplement de remorque (10), sous la forme d'un module logiciel avec un code de programme exécutable par un processeur (33) de l'unité de commande (30) et lors de l'exécution duquel l'unité de commande (30) exécute les étapes du procédé selon la revendication 14 et/ou les fonctions du dispositif de validation du procédé selon la revendication 14.
